# EUROPEAN PATENT APPLICATION

(11) **EP 4 836 020 A1**
(43) Date of publication of application: **04.11.2026**
(21) Application number: 24913022.0
(22) Date of filing: 26.12.2024
(51) Int. Cl.: H01M 4/62, C08L 9/02, C08L 15/00, H01G 11/38, H01G 11/86, H01M 4/02, H01M 4/04, H01M 4/13, H01M 4/139

(54) **POLYMER COMPOSITION FOR ELECTROCHEMICAL ELEMENT, CONDUCTIVE MATERIAL COMPOSITION, SLURRY COMPOSITION, ELECTRODE MEMBRANE, AND SECONDARY BATTERY**

(30) Priority: 27.12.2023 JP 2023222006
(71) Applicant: artience Co., Ltd., Tokyo 104-8377 (JP); Toyocolor Co., Ltd., Chuo-ku Tokyo 104-8381 (JP)
(72) Inventor: MORITA Yu, Tokyo 1048381 (JP); FUKAGAWA Soichiro, Tokyo 1048381 (JP); HIRABAYASHI Honami, Tokyo 1048381 (JP)
(74) Representative: Berggren Oy
(86) International application number: PCT/JP2024/046197
(87) International publication number: WO 2025/143136

(57) **Abstract**

Provided is a polymer composition for an electrochemical element, containing a polymer containing an aliphatic hydrocarbon unit and a nitrile group-containing unit, and an amide-based liquid medium, in which the polymer has a tan δ (loss tangent) of greater than 1 in a strain range of 0.01% to 10% in a dynamic viscoelasticity measurement performed at a temperature of 100 °C and a frequency of 10 Hz.

## Description

### Technical Field

Embodiments of the present disclosure relate to a polymer composition for an electrochemical element, a conductive material composition, a slurry composition, an electrode membrane, and a secondary battery.

### Related Art

A lithium-ion secondary battery, as one representative example of secondary batteries that are electrochemical elements, has characteristics such as being small and lightweight, having high energy density, and being capable of repeated charging and discharging. Due to such characteristics, secondary batteries are used in a wide range of applications. In the field of secondary batteries, for an electrode, particularly for a positive electrode having poor conductivity, when a carbon material such as a fine carbon nanotube having excellent conductivity or carbon black having a developed structure is used in a well-dispersed state as a conductive material, it is easy to bring out the characteristics of the electrode. Thus, studies have been conducted to disperse a conductive material by using a polymer or the like having dispersibility and improve the characteristics of secondary batteries.

As a technique for satisfactorily dispersing a conductive material in a binder composition for a secondary battery electrode, Patent Document 1 discloses using a copolymer (for example, hydrogenated nitrile rubber) having an alkylene structural unit and a nitrile group-containing monomer unit and having a Mooney viscosity (ML1+4, 100 °C) of 40 or less as a binder composition for a secondary battery electrode.

### Prior Art Documents

### Patent Documents

Patent Document 1: International Publication No. WO2017/010093

### SUMMARY OF INVENTION

### Technical Problem

In the technique disclosed in Patent Document 1, the Mooney viscosity of the copolymer in the binder composition is set to 40 or less to facilitate adsorption of the copolymer onto a surface of the conductive material, suppress aggregation of the conductive material, and improve the dispersibility of the conductive material. On the other hand, in the technique disclosed in Patent Document 1, the Mooney viscosity of the copolymer in the binder composition is set to 5 or more in order to obtain adsorption stability of the copolymer to the conductive material and maintain dispersion stability of the conductive material.

However, in order to further enhance the dispersibility of the conductive material, it is desired to develop a new polymer composition from a relatively microscopic aspect. In the case where the conductive material is subjected to dispersion treatment using a polymer composition, when the conductive material breaks, small pieces of the conductive material may be included in an electrode membrane, and formation of a conductive network may become deficient, which may cause deterioration of battery characteristics of secondary batteries.

One of the objects of the present disclosure is to provide a polymer composition for an electrochemical element enabling provision of a conductive material composition having good dispersibility, a conductive material composition containing the same, a slurry composition, an electrode membrane formed using the same, and a secondary battery.

### Solution to Problem

As a result of intensive studies by the present inventors, it was found that dispersibility in a dispersion of a conductive material can be obtained by using, as a polymer composition for an electrochemical element, a polymer and an amide-based liquid medium, in which the polymer contains an aliphatic hydrocarbon unit and a nitrile group-containing unit and has a tan δ (loss tangent) of greater than 1 in a strain range of 0.01% to 10% in a dynamic viscoelasticity measurement performed at a temperature of 100 °C and a frequency of 10 Hz. Furthermore, it was found that by using this polymer composition for an electrochemical element, both dispersibility in a dispersion of a conductive material and conductivity in an electrode membrane can be achieved. Specifically, since a wetting promotion effect of the conductive material is enhanced in the dispersion, an increase in viscosity during dispersion treatment can be suppressed, and initial dispersibility of the conductive material can be enhanced. Furthermore, the conductive material can be concentrated to a high concentration in the dispersion. In the case where the conductive material is subjected to dispersion treatment using the polymer composition, the viscoelasticity of the dispersion can be appropriately controlled by the tan δ of the polymer, so that breakage of the conductive material during dispersion treatment can be prevented. As a result, not only can a developed conductive network be formed in an electrode membrane obtained using this dispersion, but also the margin for formulation design can be increased. Accordingly, the conductive material can be uniformly distributed in the electrode membrane, the shape of the conductive material can be maintained, and an electrochemical element with high output, high capacity, and long life can be provided.

That is, the present disclosure relates to the following embodiments. However, the embodiments of the present disclosure are not limited to the following.
[1] A polymer composition for an electrochemical element, the polymer composition containing a polymer containing an aliphatic hydrocarbon unit and a nitrile group-containing unit, and an amide-based liquid medium, in which the polymer has a tan δ (loss tangent) of greater than 1 in a strain range of 0.01% to 10% in a dynamic viscoelasticity measurement performed at a temperature of 100 °C and a frequency of 10 Hz.
[2] The polymer composition for an electrochemical element described in [1], in which in a viscoelasticity measurement performed at a frequency of 10 Hz and a strain of 0.1%, when the temperature is raised at 10 °C/min in a temperature range from 30 °C to 110 °C, a measured temperature at which the polymer has a tan δ (loss tangent) equal to 1 is 80 °C or lower.
[3] The polymer composition for an electrochemical element described in [1] or [2], in which a solution containing the polymer and N-methyl-2-pyrrolidone and having a solid content concentration of 20% by mass has a viscosity of less than 3000 mPa·s at 25 °C and 60 rpm when measured with a B-type viscometer.
[4] The polymer composition for an electrochemical element described in any one of [1] to [3], in which based on a mass of the polymer, a content of the aliphatic hydrocarbon unit is 50% by mass or more and 75% by mass or less, and a content of the nitrile group-containing unit is 25% by mass or more and 50% by mass or less.
[5] The polymer composition for an electrochemical element described in any one of [1] to [4], in which the polymer has a Z average molecular weight of 10,000 or more and 250,000 or less.
[6] A conductive material composition, containing the polymer composition for an electrochemical element described in any one of [1] to [5], and a conductive material.
[7] A slurry composition, containing the polymer composition for an electrochemical element described in any one of [1] to [5], a conductive material, and an active material.
[8] An electrode membrane, formed using a slurry composition containing the polymer composition for an electrochemical element described in any one of [1] to [5], a conductive material, and an active material.
[9] A secondary battery, including a positive electrode, a negative electrode, and an electrolyte, in which at least one of the positive electrode and the negative electrode includes an electrode membrane formed using a slurry composition containing the polymer composition for an electrochemical element described in any one of [1] to [5], a conductive material, and an active material.

### Effects of Invention

According to the embodiments of the present disclosure, it is possible to provide a polymer composition for an electrochemical element enabling provision of a conductive material composition having good dispersibility, a conductive material composition containing the same, a slurry composition, an electrode membrane formed using the same, and a secondary battery.

### BRIEF DESCRIPTION OF THE DRAWINGS

[FIG. 1] FIG. 1 shows a chart of tan δ (loss tangent) in strain dependence evaluation of a polymer composition.
[FIG. 2] FIG. 2 shows a chart of tan δ (loss tangent) in temperature dependence evaluation of a polymer composition.

### DESCRIPTION OF THE EMBODIMENTS

Hereinafter, as embodiments of the present disclosure, a polymer composition for an electrochemical element, a conductive material composition, a slurry composition, an electrode membrane, and a secondary battery will be described in detail. However, the present invention is not limited to the following embodiments, and the present invention also includes embodiments implemented within a range in which the gist thereof is not changed.

In the present disclosure, carbon nanotube may be referred to as "CNT" and carbon black may be referred to as "CB." Acrylonitrile butadiene rubber may be referred to as "NBR" and hydrogenated acrylonitrile butadiene rubber may be referred to as "HNBR." In the present disclosure, the polymer composition for an electrochemical element may be simply referred to as polymer composition.

### <Polymer>

In one embodiment of the present disclosure, the polymer is a polymer containing at least an aliphatic hydrocarbon unit and a nitrile group-containing unit. Hereinafter, this polymer may be referred to as a nitrile-based polymer.

The aliphatic hydrocarbon unit is a unit containing an aliphatic hydrocarbon structure, and is preferably a unit consisting only of an aliphatic hydrocarbon structure. The aliphatic hydrocarbon structure may be a saturated or unsaturated, substituted or unsubstituted, chain or cyclic aliphatic hydrocarbon structure. Preferably, the aliphatic hydrocarbon structure contains at least a saturated aliphatic hydrocarbon structure, and may further contain an unsaturated aliphatic hydrocarbon structure. The aliphatic hydrocarbon structure preferably contains at least a linear aliphatic hydrocarbon structure, and may further contain a branched aliphatic hydrocarbon structure.

Examples of the aliphatic hydrocarbon unit include an alkylene unit, an alkenylene unit, an alkyl unit, an alkanetriyl unit, and an alkanetetrayl unit. The aliphatic hydrocarbon unit preferably includes at least an alkylene unit.

The alkylene unit is a unit containing an alkylene structure, and is preferably a unit consisting only of an alkylene structure. The alkylene structure is preferably a linear alkylene structure or a branched alkylene structure.

The alkylene unit preferably includes a unit represented by the following general formula (1A).

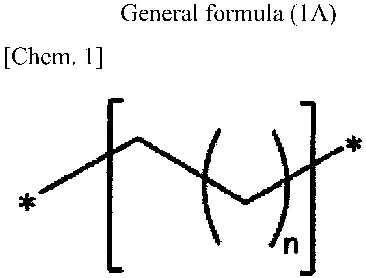

In general formula (1A), n represents 0 or an integer of 1 or more. n may be 1 to 20, 2 to 10, or 3 to 5. n is preferably an integer of 2 or more, and more preferably an integer of 3 or more. n is preferably an integer of 5 or less, and more preferably an integer of 4 or less. Particularly, n is preferably 3.

The alkylene unit preferably includes a unit represented by the following general formula (1B).

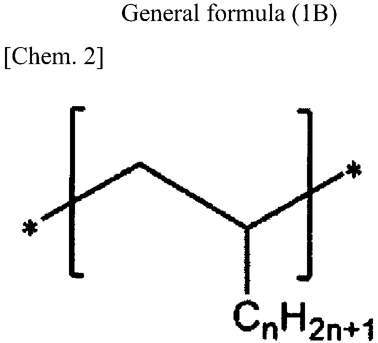

In general formula (1B), n represents an integer of 1 or more. n may be 1 to 20, 2 to 10, or 2 to 4. n is preferably an integer of 4 or less, more preferably an integer of 3 or less, and even more preferably an integer of 2 or less. Particularly, n is preferably 2.

A method for introducing the alkylene unit into the polymer is not particularly limited, and examples include the following methods (1a) or (1b).

In the method (1a), a polymer is prepared by a polymerization reaction using a monomer composition containing a conjugated diene monomer. The prepared polymer contains a monomer unit derived from the conjugated diene monomer. In the present disclosure, "a monomer unit derived from a conjugated diene monomer" may be referred to as "a conjugated diene monomer unit," and monomer units derived from other monomers may be similarly abbreviated. Next, by hydrogenating the conjugated diene monomer unit, at least a portion of the conjugated diene monomer unit is converted to an alkylene unit. In the present disclosure, "hydrogenation" may be referred to as "hydrogenation." The finally obtained polymer contains, as an alkylene unit, a unit obtained by hydrogenating the conjugated diene monomer unit.

The conjugated diene monomer unit includes at least a monomer unit having one carbon-carbon double bond. For example, the 1,3-butadiene monomer unit, which is a conjugated diene monomer unit, includes at least one monomer unit selected from the group consisting of a monomer unit having a cis-1,4 structure, a monomer unit having a trans-1,4 structure, and a monomer unit having a 1,2 structure, and may include two or more types of monomer units. The conjugated diene monomer unit may further include a monomer unit that does not have a carbon-carbon double bond and contains a branching point. In the present disclosure, "branching point" refers to a branching point in a branched polymer. In the case where the conjugated diene monomer unit includes a monomer unit containing a branching point, the polymer prepared as above is a branched polymer.

In the method (1b), a polymer is prepared by a polymerization reaction using a monomer composition containing an α-olefin monomer. The prepared polymer contains an α-olefin monomer unit. The finally obtained polymer contains the α-olefin monomer unit as an alkylene unit.

Among these, the method (1a) is preferable because the production of the polymer is easy. The number of carbon atoms in the conjugated diene monomer is 4 or more, and preferably 4 or more and 6 or less. Examples of the conjugated diene monomer include a conjugated diene compound such as 1,3-butadiene, isoprene, 2,3-dimethyl-1,3-butadiene, and 1,3-pentadiene. Among them, 1,3-butadiene is preferable. The alkylene unit preferably includes a unit (hydrogenated conjugated diene monomer unit) obtained by hydrogenating a conjugated diene monomer unit, and more preferably includes a unit (hydrogenated 1,3-butadiene monomer unit) obtained by hydrogenating a 1,3-butadiene monomer unit. One type of conjugated diene monomer can be used alone, or two or more types thereof can be used in combination.

The hydrogenation is preferably a method capable of selectively hydrogenating the conjugated diene monomer unit. Examples of the hydrogenation method include a known method such as an oil layer hydrogenation method or an aqueous layer hydrogenation method.

The hydrogenation can be performed by a conventional method. The hydrogenation can be performed, for example, by treating a polymer having a conjugated diene monomer unit with hydrogen gas in the presence of a hydrogenation catalyst while the polymer is in a state dissolved in an appropriate solvent. Examples of a hydrogenation catalyst include iron, nickel, palladium, rhodium, platinum, and copper, as well as alloys and compounds thereof.

In the method (1b), the number of carbon atoms in the α-olefin monomer is 2 or more, preferably 3 or more, and more preferably 4 or more. The number of carbon atoms in the α-olefin monomer is preferably 6 or less, and more preferably 5 or less. Examples of the α-olefin monomer include an α-olefin compound such as ethylene, propylene, 1-butene, and 1-hexene. One type of α-olefin monomer can be used alone, or two or more types thereof can be used in combination.

The alkylene unit preferably includes at least one selected from the group consisting of a unit containing a linear alkylene structure and a unit containing a branched alkylene structure, more preferably includes at least one selected from the group consisting of a unit consisting only of a linear alkylene structure and a unit consisting only of a branched alkylene structure, and even more preferably includes at least one selected from the group consisting of a unit represented by the above formula (1B) and a unit represented by the above formula (1C).

In the aliphatic hydrocarbon unit, the content of the alkylene unit is preferably 60% by mass or more, more preferably 70% by mass or more, even more preferably 80% by mass or more, and particularly preferably 90% by mass or more, based on the total mass of the aliphatic hydrocarbon unit (that is, when the mass of the aliphatic hydrocarbon unit is 100% by mass). The content of the alkylene unit is, for example, less than 100% by mass, and may be 99.5% by mass or less, 99% by mass or less, or 98% by mass or less, based on the total mass of the aliphatic hydrocarbon unit (that is, when the mass of the aliphatic hydrocarbon unit is 100% by mass). The content of the alkylene unit may be 100% by mass.

The content of the aliphatic hydrocarbon unit is preferably 40% by mass or more, more preferably 50% by mass or more, and even more preferably 60% by mass or more, based on the mass of the polymer (that is, when the mass of the polymer is 100% by mass). The content of the aliphatic hydrocarbon unit is preferably less than 85% by mass, more preferably 75% by mass or less, and even more preferably 70% by mass or less, based on the mass of the polymer (that is, when the mass of the polymer is 100% by mass).

The nitrile group-containing unit is a unit containing a nitrile group, preferably contains a unit containing an alkylene structure substituted with a nitrile group, and more preferably contains a unit consisting only of an alkylene structure substituted with a nitrile group. The alkylene structure is preferably a linear or branched alkylene structure. The nitrile group-containing unit may further contain a unit containing an alkyl structure substituted with a nitrile group, or a unit consisting only of an alkyl structure substituted with a nitrile group. The number of nitrile groups contained in the nitrile group-containing unit is preferably one.

The nitrile group-containing unit preferably includes a unit represented by the following general formula (2A).

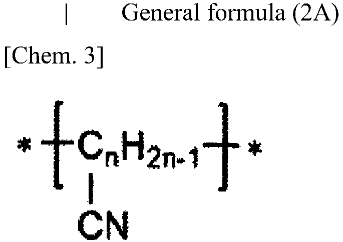

In general formula (2A), n represents an integer of 2 or more. n may be 2 to 20, 2 to 10, or 2 to 6. n is preferably an integer of 6 or less, more preferably an integer of 4 or less, and even more preferably an integer of 3 or less. Particularly, n is preferably 2.

The nitrile group-containing unit preferably includes a unit represented by the following general formula (2B).

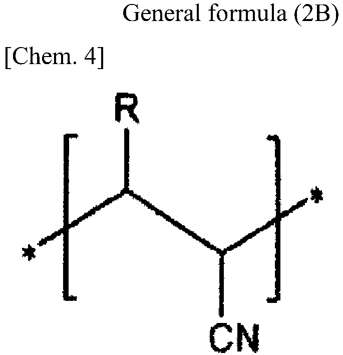

In general formula (2B), R represents a hydrogen atom or a methyl group. R is preferably a hydrogen atom.

A method for introducing the nitrile group-containing unit into the polymer is not particularly limited, and a method (method (2a)) for preparing a polymer by a polymerization reaction using a monomer composition containing a nitrile group-containing monomer can be preferably used. The finally obtained polymer contains a unit derived from the nitrile group-containing monomer as the nitrile group-containing unit. Examples of the nitrile group-containing monomer capable of forming the nitrile group-containing unit include monomers containing a polymerizable carbon-carbon double bond and a nitrile group. For example, there may be mentioned an α,β-ethylenically unsaturated group-containing compound having a nitrile group, and specifically, there may be mentioned acrylonitrile and methacrylonitrile. Particularly, from the viewpoint of enhancing the intermolecular force between polymers and/or between the polymer and a substance to be dispersed (substance to be adsorbed), the nitrile group-containing monomer preferably contains acrylonitrile. One type of nitrile group-containing monomer can be used alone, or two or more types thereof can be used in combination.

The content of the nitrile group-containing unit is preferably 15% by mass or more, more preferably 20% by mass or more, and even more preferably 25% by mass or more, based on the mass of the polymer (that is, when the mass of the polymer is 100% by mass). The content of the nitrile group-containing unit is preferably 60% by mass or less, more preferably 55% by mass or less, even more preferably 50% by mass or less, and may be 40% by mass or less, based on the mass of the polymer (that is, when the mass of the polymer is 100% by mass). By setting the content of the nitrile group-containing unit within the above range, the adsorptivity to the substance to be dispersed and the affinity to a liquid medium can be controlled, and the substance to be dispersed can be stably present in the liquid medium. The affinity of the polymer to an electrolyte solution can also be controlled, and defects such as that the polymer dissolves in the electrolyte solution in the battery and the resistance of the electrolyte solution is increased can be prevented. For example, the content of the nitrile group-containing unit may be 10% by mass to 80% by mass, 20% by mass to 60% by mass, or 30% by mass to 40% by mass, based on the mass of the polymer (that is, when the mass of the polymer is 100% by mass). A total amount of an acrylonitrile group-containing unit and a methacrylonitrile group-containing unit preferably satisfies these ranges, and the acrylonitrile group-containing unit more preferably satisfies these ranges.

As a preferred embodiment, in this polymer, the content of the aliphatic hydrocarbon unit is preferably 50% by mass or more and 75% by mass or less, and the content of the nitrile group-containing unit is preferably 25% by mass or more and 50% by mass or less, based on the mass of the polymer (that is, when the mass of the polymer is 100% by mass). As a more preferred embodiment, the polymer includes an alkylene unit and a nitrile group-containing unit. More preferably, in this polymer, the content of the alkylene unit is 50% by mass or more and 75% by mass or less, and the content of the nitrile group-containing unit is 25% by mass or more and 50% by mass or less, based on the mass of the polymer (that is, when the mass of the polymer is 100% by mass).

The polymer may further contain, as the aliphatic hydrocarbon unit, an alkenylene unit; an alkyl unit; a unit containing a branching point such as an alkanetriyl unit or an alkanetetrayl unit; or the like. The unit containing a branching point is a unit different from a unit containing a branched alkylene structure and a unit containing a branched alkyl structure.

The alkenylene unit is a unit containing an alkenylene structure, and is preferably a unit consisting only of an alkenylene structure. The alkenylene structure is preferably a linear alkenylene structure or a branched alkenylene structure.

The alkenylene unit preferably includes at least one selected from the group consisting of a unit containing a linear alkenylene structure and a unit containing a branched alkenylene structure, and more preferably includes at least one selected from the group consisting of a unit consisting only of a linear alkenylene structure and a unit consisting only of a branched alkenylene structure.

For example, in the case of obtaining the polymer through the method of (1a) above, a conjugated diene monomer unit having a carbon-carbon double bond within the unit may remain in the molecule without being hydrogenated. The finally obtained polymer may contain the conjugated diene monomer unit having a carbon-carbon double bond within the unit as the alkenylene unit.

The alkyl unit is a unit (which is, however, a unit that does not correspond to any other aliphatic hydrocarbon unit such as branched alkylene unit, a nitrile group-containing unit, an amide group-containing unit, or a carboxyl group-containing unit) containing an alkyl structure, and is preferably a unit consisting only of an alkyl structure. The alkyl structure is preferably a linear alkyl structure or a branched alkyl structure.

The alkyl unit preferably includes at least one selected from the group consisting of a unit containing a linear alkyl structure and a unit containing a branched alkyl structure, and more preferably includes at least one selected from the group consisting of a unit consisting only of a linear alkyl structure and a unit consisting only of a branched alkyl structure. The number of carbon atoms of the alkyl unit may be 1 to 20, 2 to 10, 3 to 8, or 4 to 6. For example, the alkyl unit includes an n-butyl group, a sec-butyl group, a tert-butyl group, an isobutyl group, an n-pentyl group, an isopentyl group, a neopentyl group, an n-hexyl group, and an isohexyl group.

For example, in the case of obtaining the polymer through the method of (1a) or (1b) above, it is preferable that at least a hydrogenated conjugated diene monomer unit or an α-olefin monomer unit is introduced into the polymer as a terminal group of the polymer. The finally obtained polymer may contain these monomer units as the alkyl unit.

The alkanetriyl unit is a unit containing an alkanetriyl structure, and is preferably a unit consisting only of an alkanetriyl structure. The alkanetetrayl unit is a unit containing an alkanetetrayl structure, and is preferably a unit consisting only of an alkanetetrayl structure.

For example, in the case of obtaining the polymer through the method of (1a) above, in the polymer, a conjugated diene monomer unit may be introduced, as a monomer unit that does not have a carbon-carbon double bond within the unit and that contains a branching point, into the molecule. In this case, the finally obtained polymer is a branched polymer, and may contain the conjugated diene monomer unit as an aliphatic hydrocarbon unit containing a branching point such as an alkanetriyl unit or an alkanetetrayl unit. In the case where the aliphatic hydrocarbon unit includes a unit containing a branching point, the polymer is a branched polymer. The branched polymer may be a network polymer. Since a polymer including a unit containing a branching point can be three-dimensionally adsorbed to a substance to be dispersed, dispersibility and stability can be further improved.

The polymer may contain an arbitrary unit. Examples of the arbitrary unit include an amide group-containing unit and a carboxyl group-containing unit.

The amide group-containing unit is a unit containing an amide group, preferably includes a unit containing an alkylene structure substituted with an amide group, and more preferably includes a unit consisting only of an alkylene structure substituted with an amide group. The alkylene structure is preferably a linear or branched alkylene structure. The amide group-containing unit may further include a unit containing an alkyl structure substituted with an amide group, or a unit consisting only of an alkyl structure substituted with an amide group. The number of amide groups contained in the amide group-containing unit is preferably one.

In the present disclosure, the content of a unit can be determined by using the amount of monomer used, nuclear magnetic resonance (NMR) and/or infrared spectroscopy (IR) measurement.

The polymer in the embodiments of the present disclosure is characterized in that tan δ (loss tangent) in a strain range of 0.01% to 10% is greater than 1 in a dynamic viscoelasticity measurement performed at a temperature of 100 °C and a frequency of 10 Hz.

It has been found that in the case where tan δ is in a range of 1 or less in a strain range of 0.01% to 10%, wettability of a polymer composition to a conductive material decreases. It is considered that when this tan δ is greater than 1, sufficient wettability of the polymer composition to the conductive material can be obtained, and initial dispersibility can be improved.

While dispersibility of the conductive material increases with improvement in dispersion efficiency, there is a possibility that the conductive material may break due to excessive dispersion. It has been found that in the case where tan δ is in a range of 1 or less in a strain range of 0.01% to 10%, the conductive material is likely to break when excessive dispersion is performed during dispersion treatment of the conductive material using the polymer composition. In a range where this tan δ is greater than 1, by appropriate viscoelasticity of a dispersion in the dispersion treatment, it is possible to control so as not to cause breakage of the conductive material. It is considered that this allows sufficient shape retention of the conductive material in an electrode membrane to be obtained, and battery performance can be improved. For example, in the case where a long conductive material such as carbon nanotube is used as a dispersoid, it is possible to obtain a dispersion having good dispersibility while suppressing breakage thereof and maintaining the long shape. Since the shape of a conductive material composition in which a carbon nanotube or the like is dispersed using such a polymer can be maintained in the electrode membrane, high conductivity can be exhibited.

When tan δ in a strain range of 0.01% to 10% is greater than 1, viscosity or fluidity is generated in the polymer. The polymer imparted with viscosity or fluidity makes it possible to suppress an increase in viscosity of the polymer solution. From this viewpoint as well, the initial dispersibility of the conductive material can be enhanced. The initial dispersibility can be maintained, and long-term storage stability can be obtained. It is more preferable that the polymer exhibits viscosity or fluidity at 40 °C. The polymer may be in a liquid state at 40 °C. After the polymer composition is heated at 140 °C for 1 hour to remove the solvent, the polymer preferably exhibits viscosity or fluidity at 40 °C, and may be in a liquid state.

In the dynamic viscoelasticity measurement performed at a temperature of 100 °C and a frequency of 10 Hz, tan δ (loss tangent) in a strain range of 0.01% to 10% of the polymer is preferably greater than 1, but may be 1 to 100, 1 to 50, 1 to 10, or 1 to 5.

In the present disclosure, it has been found that in this measurement of tan δ (loss tangent), the strain range of 0.01% to 10% is a factor that affects the adsorptivity of a copolymer to a conductive material, the solubility of a copolymer, the viscosity and viscousness of a copolymer, and the like in a polymer composition. By controlling tan δ (loss tangent) of the copolymer to be greater than 1 in the entire strain range of 0.01% to 10%, it is possible to contribute to improvement of dispersibility of the conductive material and improvement of shape retention of the conductive material in the polymer composition. Due to such characteristics, the polymer can be used as a dispersant in a conductive material composition.

In the case where the polymer composition in the embodiments of the present disclosure is used, the effects thereof can be exhibited in both media dispersion and media-less dispersion. In media dispersion, since tan δ (loss tangent) of the polymer is appropriately controlled, while the conductive material is added to the polymer composition and dispersion treatment is performed, collision efficiency of the dispersion media is improved, and the occurrence of breakage of the conductive material can be suppressed by the appropriate viscoelasticity of the dispersion. In media-less dispersion, since tan δ (loss tangent) of the polymer is appropriately controlled, while the conductive material is added to the polymer composition and dispersion treatment is performed, shear stress can be uniformly and sufficiently applied to the dispersion, dispersion efficiency is improved, and the occurrence of breakage of the conductive material can be suppressed by the appropriate viscoelasticity of the dispersion.

In the polymer in the embodiments of the present disclosure, in a viscoelasticity measurement performed at a frequency of 10 Hz and a strain of 0.1%, when the temperature is raised at 10 °C/min in a temperature range from 30 °C to 110 °C, a measured temperature at which tan δ (loss tangent) is equal to 1 is preferably 80 °C or lower. Hereinafter, the measured temperature at which tan δ (loss tangent) is equal to 1 is also referred to as measured temperature (tan δ = 1).

The measured temperature (tan δ = 1) of the polymer may be lower than 110 °C, or 100 °C or lower, preferably 80 °C or lower, and may be 70 °C or lower, 60 °C or lower, 50 °C or lower, 40 °C or lower, or 30 °C or lower. In the measured temperature (tan δ = 1), tan δ may be greater than 1 in the entire temperature range of 30 to 110 °C.

Since the measured temperature (tan δ = 1) is 80 °C or lower, the initial dispersibility can be further improved under normal temperature conditions in an environment where the conductive material is subjected to dispersion treatment as a dispersoid in the polymer composition. Since the adsorptivity of the polymer to the conductive material can be maintained in the polymer composition, the long-term storage stability can be further improved. While the conductive material is subjected to dispersion treatment using the polymer composition, even if excessive dispersion is performed along with the improvement of dispersion efficiency, breakage of the conductive material can be suppressed, and a conductive material composition in which the shape of the conductive material is maintained can be obtained. From this viewpoint, the measured temperature (tan δ = 1) is preferably 30 °C or higher and 110 °C or lower, more preferably 30 °C or higher and 80 °C or lower, and even more preferably 40 °C or higher and 80 °C or lower.

The tan δ of the polymer is determined by Equation 1 below and is measured in dynamic viscoelasticity measurement. $tan δ = loss modulus \left(G"\right) / storage modulus \left(G′\right)$ Equation 1

Regarding strain dependence of the polymer, tan δ can be measured using a viscoelasticity measurement apparatus (for example, MCR302e (Anton Paar)). Specifically, the measurement is performed using a parallel plate having a diameter of 25 mm and under conditions of a GAP set to a thickness of a sample, a temperature of 100 °C, a frequency of 10 Hz, and a strain range of 0.01% to 10%. Whether tan δ is greater than 1 in the strain range of 0.01% to 10% is determined.

Regarding temperature dependence of the polymer, tan δ can be measured using a viscoelasticity measurement apparatus (for example, MCR302e (Anton Paar)). Specifically, the measurement is performed using a parallel plate having a diameter of 25 mm and under conditions of a constant normal force of 100 mN, a frequency of 10 Hz, a strain of 0.1%, a temperature range from 30 °C to 110 °C, and a heating rate of 10 °C/min. The temperature at which tan δ is equal to 1 in the temperature range from 30 °C to 110 °C is determined.

A sample of the polymer to be subjected to dynamic viscoelasticity measurement is obtained by dropping the polymer solution into a fluororesin type mold, and drying to remove the solvent. In the case of a viscous polymer, the viscous polymer is cooled with liquid nitrogen and taken out in a solidified state from the fluororesin type mold for use. In detail, tan δ in the strain range of 0.01% to 10% and the measured temperature (tan δ = 1) can be measured according to a method described in the Examples.

A control method of tan δ of the nitrile-based polymer is not particularly limited. For example, tan δ can be controlled by changing the composition (such as structural unit type, content, and hydrogenation rate), structure (such as linear chain ratio), molecular weight, or preparation conditions (such as polymerization temperature and molecular weight modifier amount) of the nitrile-based polymer. For example, tan δ of the nitrile-based polymer can be controlled by the following methods.

In control method a, tan δ is increased by increasing the amount of molecular weight modifier used in the preparation of the polymer.

In control method b, tan δ of the polymer is increased by adding a base to modify the nitrile group contained in a nitrile group-containing structural unit of the polymer through hydrolysis or the like.

In control method c, tan δ is increased by applying mechanical shear stress to the polymer.

In control method b, when preparing a polymer containing an aliphatic hydrocarbon unit and a nitrile group-containing unit, a base may be added for adjustment. Alternatively, a polymer containing an aliphatic hydrocarbon unit and a nitrile group-containing unit that has already been prepared may be dissolved in a solvent capable of dissolving the polymer, and then a base may be added for adjustment. As the base to be added, at least one selected from the group consisting of an inorganic base and an organic hydroxide (organic base) can be used. When the base is added for adjustment, if heating is performed to an extent that the solvent does not ignite or boil, tan δ can be increased in a relatively short time.

Examples of the inorganic base include chloride, hydroxide, carbonate, nitrate, sulfate, phosphate, tungstate, vanadate, molybdate, niobate, borate, or alkoxide of alkali metal or alkaline earth metal; and ammonium hydroxide. Among these, from the viewpoint of easily supplying cations, hydroxide or alkoxide of alkali metal or alkaline earth metal is preferable.

Examples of the hydroxide of alkali metal include lithium hydroxide, sodium hydroxide, and potassium hydroxide. Examples of the alkoxide of alkali metal include lithium methoxide, lithium ethoxide, lithium propoxide, lithium t-butoxide, lithium n-butoxide, sodium methoxide, sodium ethoxide, sodium propoxide, sodium-t-butoxide, sodium-n-butoxide, potassium methoxide, potassium ethoxide, potassium propoxide, potassium t-butoxide, and potassium n-butoxide. Examples of the hydroxide of alkaline earth metal include calcium hydroxide and magnesium hydroxide. Among these, it is preferable to use at least one selected from the group consisting of lithium hydroxide, sodium hydroxide, potassium hydroxide, and sodium-t-butoxide, and more preferable to use sodium hydroxide. The metal contained in the inorganic base may be a transition metal.

The organic hydroxide is a salt containing an organic cation and a hydroxide ion. Examples of the organic hydroxide include trimethyl-2-hydroxyethylammonium hydroxide, tetramethylammonium hydroxide, cetyltrimethylammonium hydroxide, hexadecyltrimethylammonium hydroxide, trimethylphenylammonium hydroxide, 3-trifluoromethyl-phenyltrimethylammonium hydroxide, and benzyltrimethylammonium hydroxide. Among these, it is particularly preferable to use at least one selected from the group consisting of trimethyl-2-hydroxyethylammonium hydroxide and tetramethylammonium hydroxide.

An alkanolamine may be used as the base. Examples of the alkanolamine include monoethanolamine, diethanolamine, triethanolamine, monoisopropanolamine, diisopropanolamine, triisopropanolamine, methylethanolamine, and methyldiethanolamine.

The amount of the base used is preferably 0.1% by mass or more, more preferably 0.5% by mass or more, and even more preferably 1% by mass or more, based on the mass of the nitrile-based polymer. The amount of the base used is preferably 20% by mass or less, more preferably 15% by mass or less, even more preferably 10% by mass or less, and still more preferably 5% by mass or less, based on the mass of the nitrile-based polymer. These ranges are preferable in order to control the tan δ of the nitrile-based polymer.

In control method b, the tan δ can be increased by mixing a polymer containing an aliphatic hydrocarbon unit and a nitrile group-containing unit, a base, and a liquid medium. An arbitrary component may be further mixed. There is no limitation on the order of addition and mixing method of the polymer, base, and liquid medium to a container, and these may be added to the container simultaneously; the polymer, base, and liquid medium may be added to the container separately; or one or both of the polymer and the base may be mixed with the liquid medium to prepare a polymer-containing liquid and/or a base-containing liquid, and the polymer-containing liquid and/or the base-containing liquid may be added to the container. Particularly, since the nitrile group can be efficiently modified, a method is preferable in which a base dispersion liquid in which a base is dispersed in a liquid medium is added, during stirring, to a polymer solution in which a polymer is dissolved in a liquid medium. A disper (disperser) or a homogenizer or the like can be used for stirring. As the liquid medium, a liquid medium usable for the polymer composition described later can be used.

There is no limitation on the temperature during mixing, and the modification can be accelerated by heating to 30 °C or higher. A trace amount of water and/or alcohol may be added to the container to promote the modification of the nitrile-based polymer. The water and/or alcohol may be added to the container while the polymer and the base are mixed, may be added to the container before the nitrile-based polymer and the base are added to the container, or may be added to the container simultaneously with or following the nitrile-based polymer and the base. In the case where the nitrile-based polymer, the base, and an arbitrary component used as needed have high hygroscopicity, water may be contained as absorbed water. The amount of water and/or alcohol is preferably 0.05% to 20% by mass, more preferably 0.05% to 5% by mass, and even more preferably 0.05% to 1% by mass, based on the mass of the nitrile-based polymer.

Examples of the alcohol include methanol, ethanol, propanol, isopropanol, butanol, isobutanol, secondary butanol, tertiary butanol, benzyl alcohol, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol. One type of alcohol can be used alone, or two or more types thereof can be used in combination. The hydrolysis is preferably performed in the presence of at least one selected from the group consisting of methanol, ethanol, butanol, hexanol, and water, and is particularly preferably performed in the presence of water.

Control method c may be adjusted by applying mechanical shear stress when the polymer containing an aliphatic hydrocarbon unit and a nitrile group-containing unit is prepared, or may be adjusted by dissolving an already prepared polymer containing an aliphatic hydrocarbon unit and a nitrile group-containing unit in a liquid medium capable of dissolving the polymer, and then applying mechanical shear stress. The tan δ can also be controlled by applying mechanical shear stress to the polymer before dissolution using a roll, a kneader, or the like. However, since it is efficient to use the nitrile-based polymer as a dispersant in a state dissolved in a liquid medium capable of dissolving the polymer, it is more preferable to apply shear stress in the state of a polymer solution.

Examples of a method for applying shear stress in the polymer solution state include a method using a dispersion means such as a homogenizer or a Silverson mixer. Shear stress can also be applied using a disper or the like, but it is preferable to use a dispersion means capable of applying relatively high shear stress, such as a homogenizer or a Silverson mixer. Examples of a method for applying mechanical shear stress to the polymer before dissolution include a method using a dispersion means such as a kneader or a two-roll mill.

The polymer in the embodiments of the present disclosure preferably has a viscosity of less than 3000 mPa·s at 25 °C and 60 rpm when a solution containing the polymer and N-methyl-2-pyrrolidone and having a solid content concentration of 20% by mass is measured with a B-type viscometer.

Since the polymer according to one embodiment has improved initial dispersibility due to tan δ in a strain range of 0.01% to 10% being greater than 1, low viscosity can also be achieved in the polymer solution. Low viscosity of the polymer solution can be achieved even when the content of the polymer is high. By using a polymer having such viscosity properties, low viscosity of the polymer composition and the conductive material composition can be achieved.

When measured with a B-type viscometer at 25 °C and 60 rpm, the viscosity of the polymer solution may be less than 3000 mPa·s, less than 1000 mPa·s, or less than 500 mPa·s. For example, the viscosity of the polymer solution may be 10 mPa·s to 3000 mPa·s, or may be 100 mPa·s to 1000 mPa·s.

The viscosity of the polymer solution is a value measured using a B-type viscometer at a rotor rotation speed of 60 rpm after the polymer solution is allowed to stand in a constant temperature bath at 25 °C for 1 hour or more. In detail, the measurement can be performed according to a method in the Examples.

The polymer in the embodiments of the present disclosure preferably has a Z average molecular weight of 10,000 or more and 250,000 or less.

The polymer specified by the Z average molecular weight has a controlled molecular distribution on a high molecular weight side. In the case where the Z average molecular weight is 250,000 or less, the proportion of the high molecular weight molecular distribution decreases, the polymer comes to have viscosity and fluidity, and when a conductive material is used as a dispersoid, the wettability of the conductive material can be improved and the initial dispersibility can be further enhanced. This is particularly effective for improving the wettability of the conductive material that is a carbon material. Particularly, the Z average molecular weight is preferably 100,000 or less. In the case where the Z average molecular weight is 10,000 or more, adsorption to the conductive material in the conductive material composition can be maintained, and dispersibility can be maintained.

For example, the polymer may have a Z average molecular weight of 10,000 to 250,000, 10,000 to 200,000, 20,000 to 150,000, 30,000 to 100,000, 30,000 to 60,000, or 30,000 to 50,000. By setting the Z average molecular weight within the above ranges, when a conductive material composition is prepared using the polymer, both the initial dispersibility and the storage stability can be achieved.

The polymer in the embodiments of the present disclosure may have a weight average molecular weight (Mw) of 5,000 to 100,000, 10,000 to 70,000, or 20,000 to 50,000. Within these ranges, the effects of improving the wettability of the conductive material particularly the carbon material, and suppressing aggregation can be achieved, and the storage stability of the polymer composition can be further improved.

In the present disclosure, the Z average molecular weight and the weight average molecular weight are each measured by gel permeation chromatography (GPC) equipped with a refractive index (RI) detector using a molecular weight measurement sample. In detail, the measurement can be performed according to a method in the Examples. The Z average molecular weight and the weight average molecular weight are each polystyrene equivalent values.

A measurement sample for measuring the molecular weight of the polymer contained in the polymer composition is prepared by the following method. The polymer composition is dropped into purified water to precipitate the polymer, and the precipitate is collected. The precipitate is dissolved in tetrahydrofuran (THF) to obtain a solution. This solution is washed with purified water, and the purified precipitate is redissolved in THF to obtain a measurement sample. In detail, a measurement sample can be prepared and the molecular weight can be measured according to a method in the Examples.

The wettability of the polymer to the conductive material can be evaluated from a ratio of the solid content between the supernatant and the bottom after a dispersion of the polymer, the conductive material, and the liquid medium is prepared and allowed to stand for 24 hours. Specifically, a polymer solution of N-methyl-2-pyrrolidone (NMP) containing 8% by mass of the polymer is prepared. The conductive material is added to this polymer solution to prepare a polymer dispersion containing 2% by mass of the conductive material. This polymer dispersion is allowed to stand for 1 hour without stirring, and after standing for 1 hour, measurement samples are collected from the supernatant and the bottom. The wettability of the polymer to the conductive material can be evaluated from a mass ratio of (solid content contained in the supernatant)/(solid content contained in the bottom). This mass ratio is preferably 0.5 or more and less than 1.5, and more preferably 0.75 or more and less than 1.25. By this mass ratio, the wettability of the polymer can be relatively evaluated using carbon nanotube JENOTUBE 10B (having an average outer diameter of 10 nm and a Brunauer-Emmett-Teller (BET) specific surface area of 230 m²/g, and being a multi-walled CNT) as the conductive material. In detail, the evaluation can be performed according to a method in the Examples.

### <Liquid Medium>

In the polymer composition, the liquid medium is not particularly limited if it is miscible with the polymer. In the present disclosure, "miscible with the polymer" means that when 0.5 g of the polymer is dissolved in 100 g of the liquid medium at 25 °C, the insoluble content is 10% by mass or less. The insoluble content can be calculated by separating the undissolved polymer from the solution by filtration to collect the undissolved polymer, then drying the collected polymer with hot air, and measuring the mass.

The liquid medium is preferably capable of dissolving the polymer, and more preferably is a high dielectric constant solvent capable of dissolving the polymer. In the present disclosure, "capable of dissolving the polymer" means that when 0.5 g of the polymer is dissolved in 100 g of the liquid medium at 25 °C, no insoluble content is visually confirmed, and the solution is clear without turbidity. In the case where a liquid medium capable of dissolving the polymer is used, a good dispersion state can be easily obtained when the conductive material is added.

In one embodiment, the liquid medium preferably includes a solvent consisting of any one type of high dielectric constant solvent, or a mixed solvent consisting of two or more types of high dielectric constant solvent. One or two or more other solvents may be mixed with the high dielectric constant solvent for use. In the present disclosure, "high dielectric constant solvent" preferably has a relative permittivity value described in a solvent handbook or the like of 2.5 or more, and more preferably 25 or more, at 20 °C. In the case of preparing the conductive material composition using a high dielectric constant solvent as the liquid medium, the interaction among the nitrile group contained in the polymer of the above embodiment, the conductive material, and the liquid medium can be enhanced. From the viewpoint of solubility of the polymer, the relative permittivity of the high dielectric constant solvent is preferably 60 or less, and more preferably 50 or less, at 20 °C. In one embodiment, the relative permittivity of the high dielectric constant solvent may preferably be 30 to 50.

In one embodiment, the liquid medium is preferably a non-aqueous liquid medium. The polymer of the above embodiment tends to have low solubility in water. Hence, in the case where water is present in the conductive material composition, it tends to be difficult to obtain a desired good dispersion state. Accordingly, the liquid medium preferably does not substantially contain water. "Not substantially contain" means that water is not intentionally added beyond the amount that may be contained due to moisture absorption or the like. The water content based on the total mass of the liquid medium is preferably 5% by mass or less, more preferably 1% by mass or less, and even more preferably 0.5% by mass or less. Even in the case where the conductive material composition is prepared without adding water, the conductive material composition may contain approximately 0.1% by mass of water due to moisture absorption or the like. From the above viewpoint, the liquid medium is preferably an organic solvent, and more preferably a polar organic solvent that does not donate protons.

In the polymer composition, in the case of using a polymer containing an aliphatic hydrocarbon unit and a nitrile group-containing unit, it is preferable to use an amide-based liquid medium. The amide-based liquid medium has excellent solubility for this polymer. The amide-based liquid medium is a high dielectric constant solvent, and may enhance the interaction with this polymer and contribute to improvement of initial dispersibility. The amide-based liquid medium is a polar organic solvent that does not donate protons, and may contribute to the stability over time of this polymer as well as the conductive material, binder resin or the like.

Examples of the amide-based liquid medium include N-methyl-2-pyrrolidone (NMP), N-ethyl-2-pyrrolidone (NEP), N,N-dimethylformamide, N,N-dimethylacetamide, N,N-diethylacetamide, and N-methylcaprolactam. Among them, from the viewpoint of excellent solubility of the polymer, high dielectric constant, or the like, it is preferable to use at least one of N-methyl-2-pyrrolidone (NMP) and N-ethyl-2-pyrrolidone (NEP), it is more preferable to use N-methyl-2-pyrrolidone (NMP) alone, and it is also preferable to use N-methyl-2-pyrrolidone (NMP) in combination with other liquid media.

Further examples of other liquid media, as polar organic solvents that do not donate protons, include heterocyclic-based, sulfoxide-based, sulfone-based, lower ketone-based, and carbonate-based liquid media. More specifically, examples include the following.

Heterocyclic-based: cyclohexylpyrrolidone, 2-oxazolidone, 1,3-dimethyl-2-imidazolidinone, γ-butyrolactone, and the like.

Sulfoxide-based: dimethyl sulfoxide, and the like.

Sulfone-based: hexamethylphosphorotriamide, sulfolane, and the like.

Lower ketone-based: acetone, methyl ethyl ketone, and the like.

Carbonate-based: diethyl carbonate, dimethyl carbonate, ethyl methyl carbonate, fluoroethylene carbonate, propylene carbonate, ethylene carbonate, and the like.

Others: tetrahydrofuran, acetonitrile, and the like.

### <Polymer Composition>

A polymer composition for an electrochemical element according to one embodiment of the present disclosure contains a polymer and an amide-based liquid medium. The polymer includes an aliphatic hydrocarbon unit and a nitrile group-containing unit, and the details are as described above. The details of the amide-based liquid medium are as described above.

In the polymer composition, the nitrile-based polymer may be 1% to 50% by mass, 2% to 40% by mass, or 5% to 30% by mass with respect to the total mass of the polymer composition. Even in the case where the polymer composition is contained at a high concentration of 20% by mass or more, by having a tan δ of greater than 1 in a strain range of 0.01% to 10%, it is possible to provide a dispersion in which dispersibility of the conductive material is provided while breakage of the conductive material during dispersion treatment is suppressed and the shape of the conductive material is maintained.

In the polymer composition, the nitrile-based polymer may be 50% to 100% by mass, 75% to 100% by mass, or 80% to 99.8% by mass with respect to the total mass of the solid content.

In the polymer composition, other polymers may be contained in addition to the nitrile-based polymer. In the polymer composition, the other polymers may be 0 to 100 parts by mass, 0.1 to 50 parts by mass, or 1 to 10 parts by mass, with respect to 100 parts by mass of the nitrile-based polymer. The polymer composition may not contain any other polymers.

In the polymer composition, the amide-based liquid medium may be 50% to 99% by mass, 60% to 98% by mass, or 70% to 95% by mass, with respect to the total mass of the polymer composition.

In the polymer composition, other liquid media may be contained in addition to the amide-based liquid medium. In the polymer composition, the other liquid media may be 0 to 100 parts by mass, 0.1 to 50 parts by mass, or 1 to 10 parts by mass, with respect to 100 parts by mass of the amide-based liquid medium. The polymer composition may not contain any other liquid media. When the conductive material is subjected to dispersion treatment using the polymer composition, by using the nitrile-based polymer as a main component, and more preferably by using only the nitrile-based polymer, the viscoelasticity of the polymer composition can be appropriately controlled and breakage of the conductive material during dispersion treatment can be further suppressed.

The solid content of the polymer composition may be 1% to 60% by mass, 2% to 50% by mass, or 5% to 35% by mass. The solid content of the polymer composition may be appropriately set according to the molecular structure of the polymer, characteristics such as the type of liquid medium, the application of the polymer composition, and the type of conductive material to be dispersed. In the present disclosure, the solid content is the total amount of components excluding the liquid medium. Specifically, the polymer composition is sufficiently dried to only the solid content in an oven set at a temperature at which the liquid medium can evaporate, and the solid content is obtained by measuring the mass of the solid content of the polymer composition and dividing the same by the total mass of the polymer composition.

The polymer composition may contain an additional arbitrary component as needed. For example, the polymer composition may contain a base. The base may be a component that can be included in a raw material of the nitrile-based polymer, a component mixed in from a synthesis raw material of the nitrile-based polymer, or the like, and the details are as described above.

The polymer composition means a composition in a state not containing a conductive material and an active material. In the polymer composition, a conductive component may be 5% by mass or less, 1% by mass or less, or 0.1% by mass or less, or the conductive component may not be substantially contained. In the polymer composition, the active material may be 5% by mass or less, 1% by mass or less, or 0.1% by mass or less, or the active material may not be substantially contained.

### <Conductive material composition>

A conductive material composition according to one embodiment of the present disclosure contains a polymer composition for an electrochemical element and a conductive material. The details of the polymer composition for an electrochemical element are as described above. The conductive material is described below.

### <Conductive Material>

The conductive material is not particularly limited, and is preferably a carbon material. Examples of the carbon material having conductivity include graphite, carbon black, graphene, multilayer graphene, fullerene; and fibrous carbon materials such as carbon nanotube and carbon nanofiber. One of these may be used alone, or two or more types thereof may be used in combination. Examples of graphite include artificial graphite, flake graphite, lump graphite; and natural graphite such as earthy graphite.

The carbon material plays a role of forming a conductive path inside an electrode. From the viewpoint that disconnection due to expansion and contraction of an electrode membrane is desired to be less likely to occur, the carbon material preferably includes a fibrous carbon material, and more preferably is a fibrous carbon material. In terms of conductivity, availability, and cost, carbon black and/or carbon nanotube is preferably used. From the viewpoints of reducing raw material costs and forming an efficient conductive network, two or more types of the same kind of carbon material having different physical properties may be used in combination. Examples of the same kind of carbon material having different physical properties include two or more types of carbon nanotubes having different average outer diameters or average fiber diameters, and two or more types of carbon black having different specific surface areas.

Carbon purity of a carbon material is expressed by the content (% by mass) of carbon atoms in the carbon material. The higher the carbon purity, the more preferable. With respect to 100% by mass of the carbon material, the carbon purity is preferably 90% by mass or more, more preferably 95% by mass or more, even more preferably 98% by mass or more, and particularly preferably 99% by mass or more. By setting the carbon purity within the above range, defects such as that dendrite is formed due to impurities such as metals and short circuits are caused can be prevented.

### <Carbon Nanotube>

A carbon nanotube has a shape in which planar graphite is rolled into a cylindrical shape, and includes a single-walled carbon nanotube and a multi-walled carbon nanotube which may also be mixed. The single-walled carbon nanotube has a structure in which one layer of graphite is rolled. The multi-walled carbon nanotube has a structure in which two or three or more layers of graphite are rolled. A sidewall of the carbon nanotube does not have to have a graphite structure. The carbon nanotube may be, for example, a carbon nanotube including a sidewall having an amorphous structure.

The shape of the carbon nanotube is not limited. Examples of the shape of the carbon nanotube include various shapes including needle-like, cylindrical tube-like, fish bone-like (fish bone or cup-stacked type), trump-like (platelet), and coil-like shapes. Among them, in the present embodiment, the shape of the carbon nanotube is preferably a needle-like shape or a cylindrical tube-like shape. The carbon nanotube may have a single shape or a combination of two or more shapes.

Examples of the form of the carbon nanotube include graphite whisker, filamentous carbon, graphite fiber, ultrafine carbon tube, carbon tube, carbon fibril, carbon microtube, and carbon nanofiber. The carbon nanotube may have a single form of these, or a form in which two or more of these are combined.

The average outer diameter of the carbon nanotube is preferably 1 nm or more, more preferably 3 nm or more, and even more preferably 5 nm or more. The average outer diameter of the carbon nanotube is preferably 30 nm or less, more preferably 20 nm or less, and even more preferably 13 nm or less. In the case where the average outer diameter is within the above range, when the carbon nanotube is applied to a secondary battery, a good conductive network is likely to be formed within an electrode. During charging and discharging, since an active material inside the secondary battery can be utilized without bias, deterioration of the active material can be suppressed and cycle characteristics of the secondary battery can be further improved. The average outer diameter of the carbon nanotube can be calculated by observing and imaging the carbon nanotube with a transmission electron microscope, then selecting arbitrary 300 carbon nanotubes in an obtained observation photograph, and measuring their respective outer diameters.

The average fiber length of the carbon nanotube is preferably 0.5 µm or more, more preferably 0.8 µm or more, and even more preferably 1.0 µm or more. The fiber length of the carbon nanotube is preferably 100 µm or less, and more preferably 20 µm or less. The average fiber length of the carbon nanotube can be calculated by observing and imaging the carbon nanotube with a scanning electron microscope, then selecting arbitrary 300 carbon nanotubes in an obtained observation photograph, and measuring their respective fiber lengths. The average fiber length of the carbon nanotube in a conductor dispersion liquid is also preferably within the above range.

A value obtained by dividing a fiber length of the carbon nanotube by an outer diameter of the carbon nanotube is an aspect ratio. A representative aspect ratio can be obtained using the values of the average fiber length and the average outer diameter. The higher the aspect ratio of the conductive material, the higher conductivity can be achieved when an electrode is formed. The aspect ratio of the carbon nanotube is preferably 30 or more, more preferably 50 or more, and even more preferably 80 or more. The aspect ratio of the carbon nanotube is preferably 10,000 or less, more preferably 3,000 or less, and even more preferably 1,000 or less.

The BET specific surface area of the carbon nanotube is preferably 100 m²/g or more, more preferably 150 m²/g or more, and even more preferably 200 m²/g or more. The specific surface area of the carbon nanotube is preferably 1200 m²/g or less, more preferably 1000 m²/g or less, and even more preferably 700 m²/g or less. The BET specific surface area of the carbon nanotube can be measured by a BET method using nitrogen adsorption measurement in accordance with JIS Z 8830.

Carbon purity of a carbon nanotube is expressed by the content (% by mass) of carbon atoms in the carbon nanotube. With respect to 100% by mass of the carbon nanotube, the carbon purity is preferably 80% by mass, more preferably 90% by mass or more, even more preferably 95% by mass or more, still more preferably 98% by mass or more, and yet still more preferably 99% by mass or more or 99.5% by mass or more. By setting the carbon purity within the above range, defects such as that dendrite is formed due to impurities and short circuits are caused can be prevented. The carbon purity of the carbon nanotube can be determined by a method described in the Examples using an inductively coupled plasma (ICP) emission spectrometer.

### <Carbon Black>

Carbon black is fine particles having carbon as a main component, and is manufactured by incompletely combusting oil or gas while controlling various characteristics. Carbon black has a secondary structure (aggregate) in which primary particles are connected in a bead-like manner, and a tertiary structure (agglomerate) in which secondary structures are further aggregated, and the secondary structure and tertiary structure are collectively referred to as structure. When primary particles are observed with an electron microscope or the like, they appear spherical. However, primary particles are not chemically structurally independent entities, and are connected to adjacent primary particles within the aggregate by chemical bonds to form a secondary structure. On the other hand, secondary structures are chemically structurally independent entities, and aggregate by intermolecular forces to form a tertiary structure. Accordingly, the conductivity inside a secondary structure is higher than the conductivity between secondary structures including contact resistance. It can be said that deagglomerating the tertiary structure while maintaining the structure of the secondary structure as much as possible is effective for obtaining an electrode having excellent conductivity. The secondary structure may be simply referred to as "structure."

As the carbon black, various types such as acetylene black, furnace black, hollow carbon black, channel black, thermal black, and Ketjen black can be used. Carbon black subjected to oxidation treatment that is generally performed or carbon black subjected to graphitization treatment or the like can also be used.

The oxidation treatment of carbon black is a treatment in which, by subjecting carbon black to high-temperature treatment in air or secondary treatment with nitric acid, nitrogen dioxide, ozone, or the like, for example, an oxygen-containing polar functional group such as phenol group, quinone group, carboxyl group, or carbonyl group is directly introduced (covalently bonded) to a surface of the carbon black, and is commonly performed to improve the dispersibility of carbon black.

Examples of commercially available carbon black include Super P-Li (manufactured by TIMCAL), Ketjen Black EC-300J, EC-600JD (manufactured by Lion Corporation), and Denka Black, and Denka Black Li-400, Li-335 (manufactured by Denka Company Limited; acetylene black), but are not limited thereto, and two or more types thereof may be used in combination.

An average primary particle diameter of carbon black is preferably 10 nm to 1 µm, particularly preferably 20 nm to 200 nm, and more preferably 25 nm to 100 nm.

The average primary particle diameter of carbon black can be calculated by first observing and imaging carbon black with a transmission electron microscope, selecting arbitrary 100 spherical-like carbon black primary particles in an observation photograph, and measuring their respective outer diameters.

The BET specific surface area of carbon black is preferably 10 m²/g or more and 1500 m²/g or less, more preferably 40 m²/g or more and 1000 m²/g or less, and even more preferably 100 m²/g or more and 850 m²/g or less. In the case where the BET specific surface area is within the above range, an efficient conductive network can be formed with a small amount of carbon black, and the amount of conductive material in the electrode can be reduced. Accordingly, the degree of freedom in battery design, such as increasing the amount of active material or binder resin, is enhanced. Furthermore, during preparation of an electrode slurry, since the composite formation of the active material and carbon black is facilitated, an electrode membrane having a homogeneous conductive network in which the surface of the active material is coated with carbon black is likely to be obtained, an electrolyte decomposition reaction at an interface between the electrolyte and the active material can be suppressed, and the cycle characteristics of the battery can be improved. The BET specific surface area of carbon black can be measured by a BET method described in JIS Z 8830.

In the conductive material composition, from the viewpoints of dispersibility and storage stability, the conductive material may be 0.1% to 30% by mass, 1% to 25% by mass, or 3% to 20% by mass, with respect to the total mass of the conductive material composition.

In the conductive material composition, in the case where carbon nanotube is used as the conductive material, the content of carbon nanotube is preferably 0.1% by mass or more, more preferably 0.3% by mass or more, even more preferably 1% by mass or more, and still more preferably 3% by mass or more, with respect to the total mass of the conductive material composition. The content of carbon nanotube is preferably 20% by mass or less, and more preferably 10% by mass or less. By setting the content of carbon nanotube within the above range, the carbon nanotube is able to be present satisfactorily and stably without causing sedimentation or gelation. The content of carbon nanotube is preferably appropriately adjusted so that a conductive material composition having appropriate fluidity or viscosity can be obtained, depending on the BET specific surface area of carbon nanotube, affinity for the liquid medium, dispersing ability of the dispersant, or the like. According to one embodiment, since a nitrile-based polymer is used, the initial dispersibility and shape retention of carbon nanotube are good, and it is possible to contain carbon nanotube at a relatively high concentration. For example, the content of carbon nanotube may be in the range of 0.1% to 20% by mass with respect to the total mass of the conductive material composition, but may also be 1% to 20% by mass, 3% to 20% by mass, 4% to 20% by mass, 5 to % by mass, or 8% to 20% by mass.

In the conductive material composition, in the case where carbon black is used as the conductive material, the content of carbon black is preferably 0.1% by mass or more, more preferably 1% by mass or more, even more preferably 5% by mass or more, and still more preferably 10% by mass or more, with respect to the total mass of the conductive material composition. The content of carbon black is preferably 30% by mass or less, and more preferably 20% by mass or less. By setting the content of carbon black within the above range, the carbon black is able to be present satisfactorily and stably without causing sedimentation or gelation. The content of carbon black is preferably appropriately adjusted so that a conductive material composition having appropriate fluidity or viscosity can be obtained, depending on the BET specific surface area of carbon black, affinity for the liquid medium, dispersing ability of the dispersant, and the like. According to one embodiment, since a nitrile-based polymer is used, the initial dispersibility and shape retention of carbon black are good, and it is possible to contain carbon black at a relatively high concentration. For example, the content of carbon black may be in the range of 0.1% to 30% by mass with respect to the total mass of the conductive material composition, but may also be 1% to 20% by mass, 5% to 20% by mass, 10% to 20% by mass, 12 to % by mass, or 15 to 20% by mass.

In the conductive material composition, the nitrile-based polymer may be 0.05 to 5 parts by mass, 0.1 to 1 part by mass, or 0.2 to 0.5 part by mass, with respect to 100 parts by mass of the conductive material. According to one embodiment, since a nitrile-based polymer is used, the initial dispersibility and shape retention of the conductive material are good. The nitrile-based polymer is able to exhibit its effect even in a small amount with respect to the conductive material. For example, the nitrile-based polymer may be 0.05 to 5 parts by mass with respect to 100 parts by mass of the conductive material, but may also be 0.05 to 0.5 parts by mass, or 0.05 to 0.2 part by mass.

In the conductive material composition, the solid content may be 0.1% to 30% by mass, 1% to 25% by mass, or 3% to 20% by mass.

In the cases where the conductive material is dispersed using a disperser such as a bead mill that causes collision with media, or where treatment is performed in which the conductive material is repeatedly passed through a disperser over a long period of time, the conductive material may break and short-segment carbon material may be generated. When short-segment carbon material is generated, the viscosity of the conductive material composition decreases and the gloss of a coating film obtained by coating and drying the conductive material composition increases. Thus, based on these evaluation results alone, the dispersion state may appear to be good. However, short-segment carbonaceous material has high contact resistance and makes it difficult to form a conductive network, which may worsen the resistance of the electrode. According to one embodiment, since a nitrile-based polymer is used, the initial dispersibility and shape retention of the conductive material are good. Hence, a conductive network is likely to be formed in an electrode membrane, and rate characteristics and cycle characteristics can be improved in the secondary battery.

In one embodiment, the conductive material composition may contain an additional arbitrary component as needed. For example, the conductive material composition may appropriately contain, as an arbitrary component, a dispersant, a wetting agent, a surfactant, a pH adjuster, a wetting and penetrating agent, a leveling agent, and a polymer component, within a range in which the object of the present invention is not impaired. These arbitrary components can be added at any timing, such as before preparation of the conductive material composition, during dispersion, or after dispersion. These arbitrary components may be added at any timing during preparation of the polymer composition. These arbitrary components may be added at any timing during preparation of the slurry composition. These timings may be combined and the components may be added in stages.

As the dispersant and the polymer component, known ones can be used from those other than the nitrile-based polymer. Among them, at least one selected from the group consisting of polyvinylpyrrolidone, polyvinyl alcohol, and polyvinyl acetal is particularly preferable. A polymer in which other substituents are introduced into a portion of the above polymer, or a modified polymer may be used. When a dispersant or a polymer component is used, the weight average molecular weight is preferably 30,000 or less, more preferably 20,000 or less, and is preferably 3,000 or more. If the weight average molecular weight is outside the above range, there is a concern that adsorption between the nitrile-based polymer and the conductive material may be inhibited.

The dispersibility of the conductive material in the conductive material composition can also be evaluated by a median diameter (µm) determined by a laser diffraction/scattering particle size distribution analyzer. With the median diameter (µm) determined by a laser diffraction/scattering particle size distribution analyzer, a particle diameter of the conductive material aggregated particles can be estimated from a scattered light intensity distribution by the particles. The median diameter (µm) is preferably 0.4 or more. The median diameter (µm) is preferably 5.0 or less, and more preferably 2.0 or less. By setting the median diameter (µm) within the above range, a conductive material composition in an appropriate dispersion state can be obtained. If the median diameter (µm) is below the above range, the conductive material in an aggregated state is present; if the median diameter (µm) is above the above range, a large number of finely cut conductive materials are generated, making it difficult to form an efficient conductive network.

The dispersibility of the conductive material in the conductive material composition can also be evaluated by the gloss (that is, the intensity of reflected light at 60 ° with respect to the incident angle) measured at 60 ° of a coating film obtained by coating on a smooth glass substrate and baking and drying. For light incident on the coating film, the better the dispersibility, the smoother the coating film surface becomes, thus resulting in higher gloss. Conversely, the poorer the dispersibility, the more light scattering occurs due to irregularities on the coating film surface, thus resulting in lower gloss.

The gloss at 60 ° of the coating film is preferably 5 or more, more preferably 20 or more, even more preferably 30 or more, and particularly preferably 40 or more. The gloss at 60 ° of the coating film is preferably 120 or less, more preferably 110 or less, and even more preferably 100 or less. By setting the gloss within the above range, a conductive material composition in an appropriate dispersion state can be obtained. If the gloss is below the above range, the conductive material in an aggregated state is present; if the gloss is above the above range, a large number of finely cut conductive materials are generated, making it difficult to form an efficient conductive network.

A thixotropic index (TI) value of the conductive material composition can be calculated from a value obtained by dividing the viscosity (mPa·s) at 60 rpm by the viscosity (mPa·s) at 6 rpm measured by a B-type viscometer. The TI value is preferably 1.5 or more and 5.0 or less. In one embodiment, the TI value is more preferably 1.5 or more and less than 3.0. The higher the TI value, the greater the structural viscosity caused by entanglement of the conductive material, polymer, and other resin components, or intermolecular forces thereof; the lower the TI value, the smaller the structural viscosity. By setting the TI value within the above range, while entanglement of the conductive material, polymer, and other resin components is suppressed, the intermolecular forces of these components can be allowed to act appropriately.

### <Dispersion Method>

The conductive material composition can be produced, for example, by performing dispersion treatment and finely dispersing a polymer composition and a conductive material using a dispersing apparatus. The dispersion treatment can be performed in two or more stages in which a timing of addition of the materials to be used is arbitrarily adjusted.

Examples of the dispersing apparatus include a kneader, a two-roll mill, a three-roll mill, a planetary mixer, a ball mill, a horizontal sand mill, a vertical sand mill, an annular bead mill, an attritor, a high shear mixer, a high-pressure homogenizer, and an ultrasonic homogenizer.

From the viewpoint of promoting wetting of the conductive material and breaking up coarse particles, it is more preferable to use a high shear mixer in an initial stage of dispersion, and subsequently use a high-pressure homogenizer from the viewpoint of dispersing while maintaining the aspect ratio of the conductive material. By dispersing with a high-pressure homogenizer and then further dispersing with a bead mill, a dispersion state can be made uniform while the fiber length is maintained. Alternatively, by using the polymer composition containing the nitrile-based polymer of the present disclosure, a mixed liquid before dispersion can be prepared with a relatively low viscosity. Thus, by first dispersing with a bead mill to break up the conductive material to a certain level and then dispersing with a high-pressure homogenizer, a uniform dispersion state can also be achieved while the fiber length is maintained. The pressure when a high-pressure homogenizer is used is preferably 60 to 150 MPa, and more preferably 60 to 120 MPa.

Dispersion methods using a dispersing apparatus include batch-type dispersion, pass-type dispersion, circulation-type dispersion, and the like. Any of these methods may be used, or two or more methods may be combined. Batch-type dispersion is a method in which dispersion is performed using only a dispersing apparatus main body without using piping or the like. This method is preferable for small-scale production because handling is simple. Pass-type dispersion is a dispersion method in which a dispersing apparatus main body is equipped with a tank that supplies a liquid to be dispersed and a tank that receives the liquid to be dispersed via piping, and the liquid is passed through the dispersing apparatus main body. Circulation-type dispersion is a method in which a liquid to be dispersed that has passed through a dispersing apparatus main body is returned to a tank that supplies the liquid to be dispersed, and dispersion is performed while circulating. In all these methods, dispersion progresses as the processing time is lengthened, so passes or circulation may be repeated until a target dispersion state is achieved, and the processing amount can be increased by changing the tank size or processing time. Pass-type dispersion is preferable in that it is easier to make the dispersion state uniform compared to circulation-type dispersion. Circulation-type dispersion is preferable in that the work and manufacturing equipment are simpler compared to pass-type dispersion. In the dispersion process, disintegration of aggregated particles, breaking up of the conductive material, wetting, stabilization, and the like proceed sequentially or simultaneously, and the final dispersion state differs depending on how the process proceeds. Hence, it is preferable to manage the dispersion state in each dispersion process by using various evaluation methods. For example, management can be performed by a method described in the Examples.

### <Slurry Composition>

A slurry composition according to one embodiment of the present disclosure contains a polymer composition for an electrochemical element, a conductive material, and an active material. The details of the polymer composition for an electrochemical element and the conductive material are as described above. The active material is described below.

The slurry composition can contain a positive electrode active material or a negative electrode active material. In the present disclosure, the positive electrode active material and the negative electrode active material may be simply referred to as "active material." The active material is a material that serves as the basis for a battery reaction. The active material is classified into a positive electrode active material and a negative electrode active material based on the electromotive force. In the present disclosure, a slurry composition containing a positive electrode active material or a negative electrode active material may be referred to as "positive electrode slurry composition," "negative electrode slurry composition," or simply "slurry composition," respectively. The slurry composition is preferably in a slurry form in order to improve uniformity and processability.

### <Positive Electrode Active Material>

The positive electrode active material is not particularly limited. For example, for secondary battery applications, a metal compound such as metal oxide and metal sulfide capable of reversibly doping or intercalating lithium ions, sodium ions or the like, as well as a conductive material polymer or the like can be used. Examples include an oxide of transition metal such as Fe, Co, Ni, and Mn, a composite oxide with lithium or sodium, an inorganic compound such as a transition metal sulfide, a polyanion compound, and Prussian blue analogues. Specifically, examples include: transition metal oxide powder such as MnO, V₂O₅, V₆O₁₃, and TiO₂; composite oxide powder of lithium and transition metal such as lithium nickelate, lithium cobaltate, and lithium manganate having a layered structure, and lithium manganate having a spinel structure; a lithium iron phosphate-based material which is a phosphate compound having an olivine structure; transition metal sulfide powder such as TiS₂ and FeS; sodium ferrate, sodium manganate, sodium chromate, and sodium nickelate having a layered structure; and a sodium iron phosphate-based material which is a phosphate compound having an olivine structure. Conductive polymers such as polyaniline, polyacetylene, polypyrrole, and polythiophene can also be used. The above inorganic compounds and organic compounds may be used in combination.

The positive electrode active material is preferably a composite oxide with lithium containing transition metal such as Al, Fe, Co, Ni, and Mn, more preferably a composite oxide with lithium containing any of Al, Co, Ni, and Mn, and particularly preferably a composite oxide with lithium containing Ni and/or Mn. The active material containing Ni and/or Mn (especially in the case where the total amount of Ni and/or Mn in the transition metal is 50 mol% or more) tends to become highly basic due to raw material-derived components or elution of metal ions. As a result, gelation of the binder or deterioration of the dispersion state is likely to occur, thus making the problems addressed by the present disclosure become prominent. Accordingly, in the case of a battery containing the active material containing Ni and/or Mn, the embodiments of the present disclosure are particularly effective.

### <Negative Electrode Active Material>

The negative electrode active material is not particularly limited if it is capable of doping or intercalating lithium ions, sodium ions or the like. For example, an alloy-based material such as metallic Li or an alloy thereof, a tin alloy, a silicon alloy, and a lead alloy; a metal oxide-based material such as Li_{X}TiO₂, Li_{X}Fe₂O₃, Li_{X}Fe₃O₄, and Li_{X}WO₂; a conductive polymer such as polyacetylene and poly-p-phenylene; artificial graphite such as a highly graphitized carbon material; carbonaceous powder such as natural graphite; and a resin-fired carbon material can be used. Here, x is a number, and 0<x<1.

One type of these negative electrode active materials can be used alone, or multiple types thereof can be used in combination. Particularly, in the case of using a silicon alloy negative electrode, although the theoretical capacity is large, the volume expansion is extremely large, so it is preferable to use the silicon alloy negative electrode in combination with artificial graphite such as a highly graphitized carbon material, carbonaceous powder such as natural graphite, and a resin-fired carbon material.

In the case where the conductive material in the slurry composition is carbon nanotube, the content of carbon nanotube is preferably 0.01% by mass or more, more preferably 0.02% by mass or more, and even more preferably 0.03% by mass or more, based on the mass of the active material (with the mass of the active material being 100% by mass). The content of carbon nanotube is preferably 10% by mass or less, more preferably 5% by mass or less, and even more preferably 3% by mass or less. In the case where the conductive material is carbon black, the content of carbon black is preferably 1% by mass or more, more preferably 2% by mass or more, and even more preferably 3% by mass or more, based on the mass of the active material (with the mass of the active material being 100% by mass). The content of carbon black is preferably 20% by mass or less, and more preferably 10% by mass or less. The conductive material may be a combination of carbon nanotube and carbon black, or two or more types of each may be used, but it is preferable that a total addition amount of each is within the above range. If the content is above the above range, the filling amount of the active material in the electrode decreases, leading to a reduction in battery capacity. If the content is below the above range, the conductivity of the electrode and battery may become insufficient.

The content of the nitrile-based polymer in the slurry composition is preferably 0.01% by mass or more, and more preferably 0.02% by mass or more, based on the mass of the active material (with the mass of the active material being 100% by mass). The content of the nitrile-based polymer is preferably 10% by mass or less, and more preferably 5% by mass or less.

### <Binder Resin>

The slurry composition may further contain a binder resin. The binder resin used in the slurry composition is a resin capable of binding substances such as the active material and the conductive material. The binder resin is not particularly limited if it is typically used as a binder resin for coatings, and can be appropriately selected according to the purpose. That is, in addition to the nitrile-based polymer, a resin capable of binding substances such as the active material and the conductive material may be contained.

Examples of the binder resin used in the slurry composition include: a polymer or copolymer containing, as a structural unit, ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal, and vinyl pyrrolidone; polyurethane resin, polyester resin, phenol resin, epoxy resin, phenoxy resin, urea resin, melamine resin, alkyd resin, acrylic resin, formaldehyde resin, silicone resin, fluororesin; cellulose resin such as carboxymethyl cellulose (CMC); an elastomer such as styrene-butadiene rubber and fluororubber; and conductive resin such as polyaniline and polyacetylene. A modified product, mixture, or copolymer of these resins may be used.

Among these, as the binder resin used in a composition for positive electrodes, a polymer or copolymer having fluorine atoms in the molecule is preferable in terms of resistance. For example, polyvinylidene fluoride, polyvinyl fluoride, and tetrafluoroethylene are preferable. As the binder resin used in a composition for negative electrodes, carboxymethyl cellulose (CMC), styrene-butadiene rubber, and polyacrylic acid are preferable due to good adhesion.

The content of the binder resin used in the slurry composition is preferably 0.5% to 30% by mass, and more preferably 0.5% to 25% by mass, in a non-volatile content of the slurry composition.

In the case where the slurry composition contains the binder resin, the content of the binder resin in the slurry composition is preferably 0.5% by mass or more, and more preferably 0.8% by mass or more, based on the mass of the active material (with the mass of the active material being 100% by mass). The content is preferably 30% by mass or less, more preferably 25% by mass or less, and even more preferably 20% by mass or less.

The solid content in the slurry composition is preferably 30% by mass or more, and more preferably 40% by mass or more, based on the mass of the slurry composition (with the mass of the slurry composition being 100% by mass). The solid content is preferably 90% by mass or less, and more preferably 80% by mass or less.

The slurry composition can be prepared by various conventionally known methods, and examples include: a method in which an active material is added to a conductive material composition for preparation; a method in which an active material is added to a conductive material composition and then a binder resin is added for preparation; a method in which a binder resin is added to a conductive material composition and then an active material is added for preparation; and a method in which an active material, a binder resin, and a liquid medium as needed are first mixed together, and then a conductive material composition is added for preparation. As a method for preparing a slurry composition containing a carbon nanotube as a conductive material, a method for adding a binder resin to a conductive material composition and then further adding an active material and performing dispersion treatment is preferable. By preparing with this method, the slurry composition can be prepared without disrupting the dispersion state of the carbon nanotube. The dispersion apparatus used for dispersion is not particularly limited. The slurry composition can be obtained using the dispersion means mentioned as an example in the description of the conductive material composition.

### <Electrode Membrane>

An electrode membrane according to one embodiment of the present disclosure is formed using a slurry composition. The details of the slurry composition are as described above. An electrode including a current collector and an electrode membrane formed on the current collector can be provided.

The electrode membrane can be obtained, for example, by applying the slurry composition onto the current collector and drying. An electrode membrane formed using a positive electrode slurry composition can be used as a positive electrode. An electrode membrane formed using a negative electrode slurry composition can be used as a negative electrode. In the present disclosure, a membrane formed using a slurry composition containing an active material may be referred to as an "electrode mixture layer."

The material and shape of the current collector used for forming the electrode membrane are not particularly limited, and can be appropriately selected according to various secondary batteries. Examples of the material of the current collector include a conductive metal or alloy, such as aluminum, copper, nickel, titanium, or stainless steel. As for the shape, a planar foil is generally used, and a current collector with a roughened surface, a perforated foil-shaped current collector, and a mesh-shaped current collector can also be used. The current collector preferably has a thickness of about 0.5 to 30 µm.

A method for applying the slurry composition onto the current collector is not particularly limited, and known methods can be used. Specific examples of the application method include a die coating method, a dip coating method, a roll coating method, a doctor coating method, a knife coating method, a spray coating method, a gravure coating method, and a screen printing method or an electrostatic coating method. Examples of the drying method include air drying, or drying using a blower dryer, hot air dryer, infrared heater, and far-infrared heater, but are not particularly limited thereto.

After application, rolling treatment may be performed using a lithographic press, calender roll, or the like. The formed membrane has a thickness of, for example, 1 µm or more and 500 µm or less, and preferably 10 µm or more and 300 µm or less.

The electrode membrane formed using the slurry composition can also be used as an underlayer of an electrode mixture layer. By providing such an underlayer, the adhesion between the electrode mixture layer and the current collector can be improved, or the conductivity of the electrode membrane can be improved.

### <Electrochemical Element>

According to one embodiment of the present disclosure, an electrochemical element can be provided. As the electrochemical element, a secondary battery and a capacitor or the like are suitable. At least one of electrode bodies of the electrochemical element preferably includes an electrode membrane formed using a slurry composition. The details of the slurry composition and the electrode membrane are as described above. Examples of the secondary battery include a lithium ion secondary battery, an alkaline secondary battery, a lead-acid battery, a sodium-sulfur secondary battery, and a lithium-air secondary battery. The secondary battery is preferably a non-aqueous secondary battery. Examples of the capacitor include an electric double layer capacitor, a lithium ion capacitor, a hybrid capacitor, and a redox capacitor.

### <Secondary Battery>

A secondary battery according to one embodiment of the present disclosure is a secondary battery including a positive electrode, a negative electrode, and an electrolyte, in which at least one of the positive electrode and the negative electrode includes an electrode membrane formed using a slurry composition. The details of the slurry composition and the electrode membrane are as described above.

As the electrolyte, various conventionally known materials capable of ion migration can be used. For example, the electrolyte may include lithium salt such as LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN, or LiBPh₄ (where Ph is a phenyl group), but is not limited thereto. The electrolyte is preferably dissolved in a non-aqueous solvent and used as an electrolytic solution.

The non-aqueous solvent is not particularly limited, and examples thereof include: carbonates, such as ethylene carbonate, propylene carbonate, butylene carbonate, dimethyl carbonate, ethyl methyl carbonate, and diethyl carbonate; lactones, such as γ-butyrolactone, γ-valerolactone, and γ-octanoic lactone; glymes, such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters, such as methyl formate, methyl acetate, and methyl propionate; sulfoxides, such as dimethyl sulfoxide and sulfolane; and nitriles, such as acetonitrile. These solvents may each be used alone, or may be used in a mixture of two or more types thereof.

A non-aqueous electrolyte secondary battery preferably includes a separator. Examples of the separator include polyethylene nonwoven fabric, polypropylene nonwoven fabric, polyamide nonwoven fabric, and nonwoven fabric obtained by subjecting the above to hydrophilic treatment, but are not particularly limited thereto.

A structure of the non-aqueous electrolyte secondary battery of the present embodiment is not particularly limited. In one embodiment, the non-aqueous electrolyte secondary battery may typically include a positive electrode and a negative electrode, and a separator provided as needed. The non-aqueous electrolyte secondary battery can have various shapes, such as paper type, cylindrical type, button type, and laminated type, depending on the intended use.

### Examples

The present invention is described in more detail below with reference to examples. The present invention is not limited to the following examples as long as the gist thereof is not exceeded. Unless otherwise specified, "parts" means "parts by mass" and "%" means "% by mass." The blending amounts in the tables are parts by mass, and values other than solvents are converted to non-volatile content. Blank cells in the tables indicate that the component was not blended.

The materials used in Examples and Comparative Examples are shown below.
·Hydrogenated nitrile butadiene rubber (manufactured by Zannan SciTech; liquid hydrogenated nitrile butadiene rubber; having a weight average molecular weight of 30,000, a content of alkylene structural unit of 66% by mass, and a content of nitrile group-containing structural unit of 34% by mass), hereinafter referred to as HNBR2.
·Hydrogenated nitrile butadiene rubber (manufactured by Zannan SciTech; ZN35052; having a Mooney viscosity of 20, a weight average molecular weight of 110,000, a content of alkylene structural unit of 66% by mass, and a content of nitrile group-containing structural unit of 34% by mass), hereinafter referred to as HNBR4.
·Li-335: Denka Black Li-335 (manufactured by Denka Company Limited; acetylene black; having an average primary particle diameter of 23 nm, a BET specific surface area of 141 m²/g, and a carbon purity of 99.9%), hereinafter referred to as CB1.
·Cellseed NMC (LiNi_{0.6}Co_{0.2}Mn_{0.2}O₂; manufactured by Nippon Chemical Industrial Co., Ltd.; having a non-volatile content of 100%), hereinafter referred to as NCM1.
·S800 (LiNi_{0.8}Mn_{0.1}Co_{0.1}O₂; manufactured by Jinhe; having a non-volatile content of 100%), hereinafter referred to as NCM2.
·NAT-7050 (LiNi_{0.8}Co_{0.15}Al_{0.05}O₂; manufactured by BASF TODA Battery Materials LLC), hereinafter referred to as NCA.
·HED (trademark) LFP-400 (lithium iron phosphate; manufactured by BASF), hereinafter referred to as LFP.

### <CNT1>

10 kg of JENOTUBE 10B (manufactured by JEIO; having an average outer diameter of 10 nm and a BET specific surface area of 230 m²/g) was weighed into a 120 L heat-resistant container, and the heat-resistant container containing JENOTUBE 10B was placed in a furnace. Thereafter, nitrogen gas was introduced into the furnace, and the air in the furnace was discharged while positive pressure was maintained. After the oxygen concentration in the furnace became 0.1% or less, heating was performed to 1600 °C over 30 hours. While the furnace temperature was maintained at 1600 °C, chlorine gas was introduced at a rate of 50 L/min for 50 hours. Thereafter, nitrogen gas was introduced at 50 L/min and cooling was performed while positive pressure was maintained to obtain purified JENOTUBE 10B. The carbon purity was 99.9%.

Furthermore, the purified JENOTUBE 10B was charged into a dynamic mill (manufactured by Nippon Coke & Engineering Co., Ltd.) with zirconia beads having a diameter of 8 mm as grinding media, supplied at an operating condition of 10.0 kg/h, and treated at a peripheral speed of 5.0 m/s to obtain CNT1.

CNT1 was acid-decomposed using a microwave sample pretreatment device (manufactured by Milestone General; ETHOS 1), and metals contained in the carbon material were extracted. Analysis was performed using a multi-type ICP emission spectrometer (manufactured by Agilent; 720-ES), and the amount of metals (total amount of iron, cobalt, nickel, copper, nickel, and chromium) contained in the extract was calculated. The carbon purity of CNT1 was calculated as follows and was 99.9%. 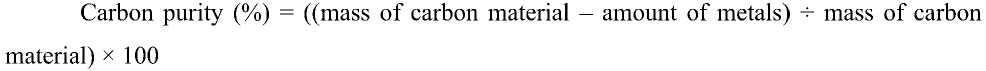 Carbon purity (%) = ((mass of carbon material - amount of metals) ÷ mass of carbon material) × 100

### <CNT2>

10 kg of JENOTUBE 6A (manufactured by JEIO; having an average outer diameter of 6 nm and a BET specific surface area of 650 m²/g) was weighed into a 120 L heat-resistant container, and the heat-resistant container containing JENOTUBE 6A was placed in a furnace. Thereafter, nitrogen gas was introduced into the furnace, and the air in the furnace was discharged while positive pressure was maintained. After the oxygen concentration in the furnace became 0.1% or less, heating was performed to 1600 °C over 30 hours. While the furnace temperature was maintained at 1600 °C, chlorine gas was introduced at a rate of 50 L/min for 50 hours. Thereafter, nitrogen gas was introduced at 50 L/min and cooling was performed while positive pressure was maintained to obtain purified JENOTUBE 6A (CNT2).

CNT2 was acid-decomposed using a microwave sample pretreatment device (manufactured by Milestone General; ETHOS 1), and metals contained in the carbon material were extracted. Thereafter, analysis was performed using a multi-type ICP emission spectrometer (manufactured by Agilent; 720-ES), and the amount of metals (total amount of iron, cobalt, nickel, copper, nickel, and chromium) contained in the extract was calculated. The carbon purity of CNT2 was 99.9%.

### <LFMP>

LFMP was synthesized by the following synthesis procedure. 200 g of dimethyl sulfoxide was added to 150 g of pure water, and 360 mmol of lithium hydroxide monohydrate was added. To the resulting solution, 120 mmol of phosphoric acid was further added using an 85% by weight phosphoric acid aqueous solution, and 96 mmol of manganese(II) sulfate monohydrate and 24 mmol of iron(II) sulfate heptahydrate were further added. The resulting solution was transferred to an autoclave, and heated and maintained for 4 hours so that the inside of the container was maintained at 150 °C. After heating, the supernatant of the solution was discarded, and lithium manganese iron phosphate LiMn_{0.8}Fe_{0.2}PO₄ was obtained as a precipitate. The obtained lithium manganese iron phosphate was washed with pure water, then an operation of removing the supernatant by centrifugation was repeated 5 times, and finally pure water was added again to obtain a dispersion liquid. Subsequently, glucose having the same weight as 15% by weight of the lithium manganese iron phosphate in the dispersion liquid was added to the dispersion liquid and dissolved, and then pure water was added to adjust the solid content concentration of the dispersion liquid to 20% by weight, and an LFMP dispersion liquid was obtained. The obtained LFMP dispersion liquid was dried with hot air at 200 °C using a spray dryer (manufactured by Fujisaki Electric Co., Ltd.; MDL-050B) to obtain secondary particles. The obtained secondary particles were heated at 700 °C for 4 hours under a nitrogen atmosphere using a rotary kiln to obtain carbon-coated LFMP particles (hereinafter referred to as LFMP).

### <Polymer Composition>

### [Synthesis of HNBR1]

HNBR1 was synthesized by the following synthesis procedure. 500 g of monochlorobenzene was placed in an autoclave of 1 L capacity equipped with a stirrer. While the mixture was stirred, 75 g of nitrile rubber (Perbunan (registered trademark) 3430: having a content of nitrile group-containing unit of 34% and a Mooney viscosity of 32) finely cut with a rubber chopper was put therein and dissolved. After the nitrile rubber was completely dissolved, 4 phr of 1-hexene was added to the container, and the solution was stirred for 2 hours. At that time, 1,3-bis-(2,4,6-trimethylphenyl)-2-imidazolidinylidene)(tricyclohexylphosphine)-ruthenium(phenyl-methylene) dichloride, which as a catalyst, was dissolved in 20 mL of monochlorobenzene and added to the container. The reaction mixture was reacted for 12 hours while being stirred at a temperature of 22 °C. After the reaction, a monochlorobenzene solution of tris-(triphenylphosphine)rhodium chloride (0.06 phr) was charged into the reactor, and the reactor was pressurized with hydrogen to 85 bar. The reaction mixture was reacted for 4 hours at a temperature of 135 °C while being stirred (500 rpm) to obtain a polymer solution. After being concentrated to a certain extent with a rotary evaporator, the solution was poured into a stainless steel tray and dried in an exhaust-type heating oven heated to 140 °C until the odor of monochlorobenzene disappeared to obtain HNBR1. A structural unit derived from acrylonitrile determined from the ¹H-NMR quantitative spectrum was 34%.

### [Preparation of HNBR3]

92 parts by mass of NMP were placed in a stainless steel container and stirred with a disper while heating so that the liquid temperature reached 80 °C. 8 parts by mass of HNBR2 heated to 80 °C in a separate container were added to the NMP and stirred for 1 hour to prepare a polymer solution. 1000 parts by mass of methanol were placed in another stainless steel container and stirred at room temperature (25 °C), during which the previously prepared polymer solution was added dropwise. The mixture was allowed to coagulate, decant, and was dried in an exhaust-type heating oven heated to 140 °C. The above processes (preparation of polymer solution, coagulation with methanol, decantation, and drying) were repeated 3 times to obtain HNBR3. A structural unit derived from acrylonitrile determined from the ¹H-NMR quantitative spectrum was 34%.

### [Preparation of HNBR5]

Into an autoclave equipped with a stirrer, 240 parts of ion-exchanged water, 2.5 parts of sodium alkylbenzenesulfonate as an emulsifier, 35 parts of acrylonitrile as a nitrile group-containing monomer, and 0.85 part of t-dodecyl mercaptan as a chain transfer agent were placed in this order. After the inside was purged with nitrogen, 65 parts of 1,3-butadiene as a conjugated diene monomer was pressure-fed, and 0.25 part of ammonium persulfate as a polymerization initiator was added to carry out a polymerization reaction at a reaction temperature of 40 °C. Thus, a polymer of acrylonitrile and 1,3-butadiene was obtained. The polymerization conversion rate was 85%.

Ion-exchanged water was added to the obtained copolymer to obtain a solution having a total solid content concentration adjusted to 12% by mass. 400 mL of the obtained solution (having a total solid content of 48 g) was put into an autoclave of 1 L capacity equipped with a stirrer, and nitrogen gas was flowed for 10 minutes to remove dissolved oxygen in the solution. Then, 75 mg of palladium acetate as a catalyst for hydrogenation reaction was dissolved in 180 mL of ion-exchanged water to which nitric acid at 4 times the molar amount relative to palladium (Pd) had been added, and was added. After the inside of the system was purged twice with hydrogen gas, the contents of the autoclave were heated to 50 °C while pressurized with hydrogen gas to 3 MPa, and a hydrogenation reaction was carried out for 6 hours.

Next, the autoclave was returned to atmospheric pressure, and further, 25 mg of palladium acetate as a catalyst for hydrogenation reaction was dissolved in 60 mL of ion-exchanged water to which nitric acid at 4 times the molar amount relative to Pd had been added, and was added. After the inside of the system was purged twice with hydrogen gas, the contents of the autoclave were heated to 50 °C while pressurized with hydrogen gas to 3 MPa, and a hydrogenation reaction was carried out for 6 hours.

Thereafter, the contents were returned to room temperature, and the inside of the system was made into a nitrogen atmosphere. Then, the contents were concentrated using an evaporator until the solid content concentration reached 40%, and an aqueous dispersion of the polymer was obtained.

The aqueous dispersion of the polymer was dropped into methanol to coagulate the polymer, and then a coagulated product was vacuum-dried at a temperature of 60 °C for 12 hours to obtain HNBR5. A structural unit derived from acrylonitrile determined from the ¹H-NMR quantitative spectrum was 35%, and the Mooney viscosity (ML1+4, 100 °C) was 10.

### [Preparation of Polymer Composition]

### (Polymer Composition 1)

800 parts by mass of NMP were charged into a reaction vessel equipped with a gas inlet tube, a thermometer, a condenser, and a stirrer, and purged with nitrogen gas. Thereafter, the inside of the reaction vessel was heated to 80 °C, 200 parts of HNBR1 were added, and the mixture was stirred until HNBR1 was completely dissolved to obtain Polymer Composition 1 (having a solid content concentration of 20% by mass).

### (Polymer Compositions 2 to 3)

Polymer Compositions 2 to 3 were obtained in the same manner as Polymer Composition 1, except that the polymer to be dissolved was changed to those shown in Table 1.

### (Polymer Composition 4)

475 parts by mass of NMP and 25 parts by mass of NaOH (manufactured by Tosoh Corporation; Tosoh Pearl) were added to a plastic container having a capacity of 1000 cm³, and dispersion was performed at a speed of 9000 rpm using a high shear mixer (L5M-A; manufactured by Silverson) equipped with a fine emulsor screen until the entire mixture became uniform. Thereafter, the mixture was passed through a nylon filter having an opening of 150 µm using a filter bell to prepare a NaOH dispersion liquid (having a NaOH concentration of 5% by mass).

780 parts by mass of NMP were charged into a reaction vessel equipped with a gas inlet tube, a thermometer, a condenser, and a stirrer, and purged with nitrogen gas. Thereafter, the inside of the reaction vessel was heated to 80 °C, 200 parts of HNBR2 were added, and the mixture was stirred until the hydrogenated nitrile butadiene rubber was completely dissolved. Thereafter, 20 parts by mass of NaOH dispersion liquid (having a NaOH concentration of 5% by mass) were added, the mixture was stirred while air was added, and heated while the reaction vessel was maintained at 80 °C for 12 hours to obtain Polymer Composition 4 (having a solid content concentration of 20.1% by mass).

### (Polymer Compositions 5, 8 to 9)

Polymer Compositions 5, 8 to 9 were obtained in the same manner as Polymer Composition 4, except that the base type and addition amount were changed to those shown in Table 1.

### (Polymer Composition 6)

425 parts by mass of NMP and 75 parts by mass of NaOH (manufactured by Tosoh Corporation; Tosoh Pearl) were added to a plastic container having a capacity of 1000 cm³, and dispersion was performed at a speed of 9000 rpm using a high shear mixer (L5M-A; manufactured by Silverson) equipped with a fine emulsor screen until the entire mixture became uniform. Thereafter, the mixture was passed through a nylon filter having an opening of 150 µm using a filter bell to prepare a NaOH dispersion liquid (having a NaOH concentration of 15% by mass).

773.3 parts by mass of NMP were charged into a reaction vessel equipped with a gas inlet tube, a thermometer, a condenser, and a stirrer, and purged with nitrogen gas. Thereafter, the inside of the reaction vessel was heated to 80 °C, 200 parts of HNBR2 were added, and the mixture was stirred until the hydrogenated nitrile butadiene rubber was completely dissolved. Thereafter, 26.7 parts by mass of NaOH dispersion liquid were added, the mixture was stirred while air was added, and heated while the reaction vessel was maintained at 80 °C for 12 hours to obtain Polymer Composition 6 (having a solid content concentration of 20.4% by mass).

### (Polymer Composition 7)

Polymer Composition 7 was obtained in the same manner as Polymer Composition 6, except that the solid content concentration of the polymer was kept constant, the base type and addition amount were changed to those shown in Table 1, and the NMP amount was adjusted.

### (Comparative Polymer Composition 1)

800 parts by mass of NMP were charged into a reaction vessel equipped with a gas inlet tube, a thermometer, a condenser, and a stirrer, and purged with nitrogen gas. Thereafter, the inside of the reaction vessel was heated to 80 °C, 200 parts of HNBR4 were added, and the mixture was stirred until the hydrogenated nitrile butadiene rubber was completely dissolved to obtain Comparative Polymer Composition 1 (having a solid content concentration of 20% by mass).

### (Comparative Polymer Composition 2)

475 parts by mass of NMP and 25 parts by mass of NaOH (manufactured by Tosoh Corporation; Tosoh Pearl) were added to a plastic container having a capacity of 1000 cm³, and dispersion was performed at a speed of 9000 rpm using a high shear mixer (L5M-A; manufactured by Silverson) equipped with a fine emulsor screen until the entire mixture became uniform. Thereafter, the mixture was passed through a nylon filter having an opening of 150 µm using a filter bell to prepare a NaOH dispersion liquid.

780 parts by mass of NMP were charged into a reaction vessel equipped with a gas inlet tube, a thermometer, a condenser, and a stirrer, and purged with nitrogen gas. Thereafter, the inside of the reaction vessel was heated to 80 °C, 200 parts of HNBR4 were added, and the mixture was stirred until the hydrogenated nitrile butadiene rubber was completely dissolved. Thereafter, 20 parts by mass of NaOH dispersion liquid were added, the mixture was stirred while air was added, and heated while the reaction vessel was maintained at 80 °C for 12 hours to obtain Comparative Polymer Composition 2 (having a solid content concentration of 20.1% by mass).

### (Comparative Polymer Composition 3)

800 parts by mass of NMP were charged into a reaction vessel equipped with a gas inlet tube, a thermometer, a condenser, and a stirrer, and purged with nitrogen gas. Thereafter, the inside of the reaction vessel was heated to 80 °C, 200 parts of HNBR5 were added, and the mixture was stirred until the hydrogenated nitrile butadiene rubber was completely dissolved to obtain Comparative Polymer Composition 3 (having a solid content concentration of 20% by mass).

### (Comparative Polymer Composition 4)

425 parts by mass of NMP and 75 parts by mass of NaOH (manufactured by Tosoh Corporation; Tosoh Pearl) were added to a plastic container having a capacity of 1000 cm³, and dispersion was performed at a speed of 9000 rpm using a high shear mixer (L5M-A; manufactured by Silverson) equipped with a fine emulsor screen until the entire mixture became uniform. Thereafter, the mixture was passed through a nylon filter having an opening of 150 µm using a filter bell to prepare a NaOH dispersion liquid (having a NaOH concentration of 15% by mass).

940 parts by mass of NMP were charged into a reaction vessel equipped with a gas inlet tube, a thermometer, a condenser, and a stirrer, and purged with nitrogen gas. Thereafter, the inside of the reaction vessel was heated to 80 °C, 30 parts of HNBR4 were added, and the mixture was stirred until the hydrogenated nitrile butadiene rubber was completely dissolved. Thereafter, 30 parts by mass of NaOH dispersion liquid (having a NaOH concentration of 15% by mass) were added, the mixture was stirred while air was added, and heated while the reaction vessel was maintained at 80 °C for 12 hours to obtain Comparative Polymer Composition 4 (having a solid content concentration of 3.5% by mass).

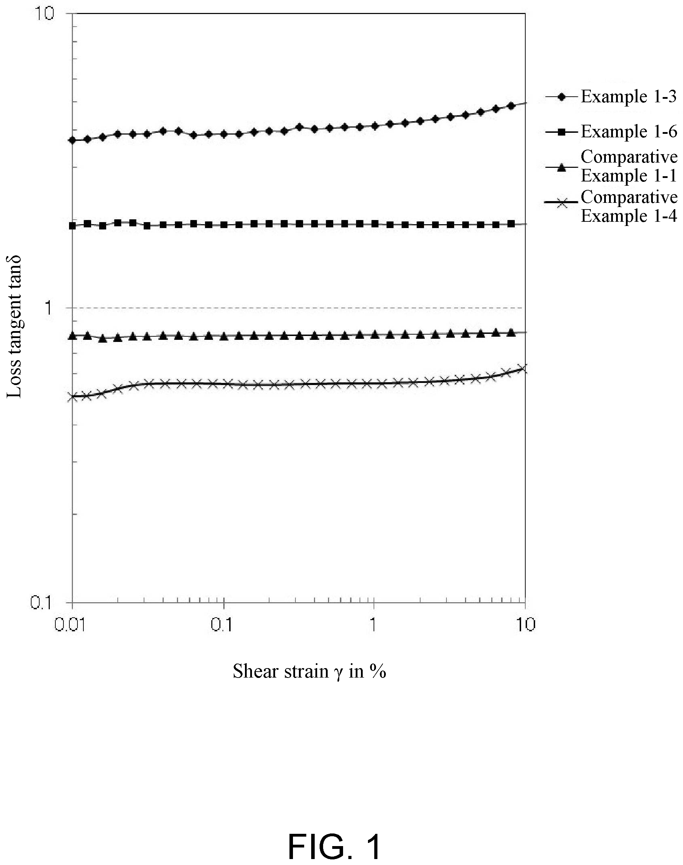

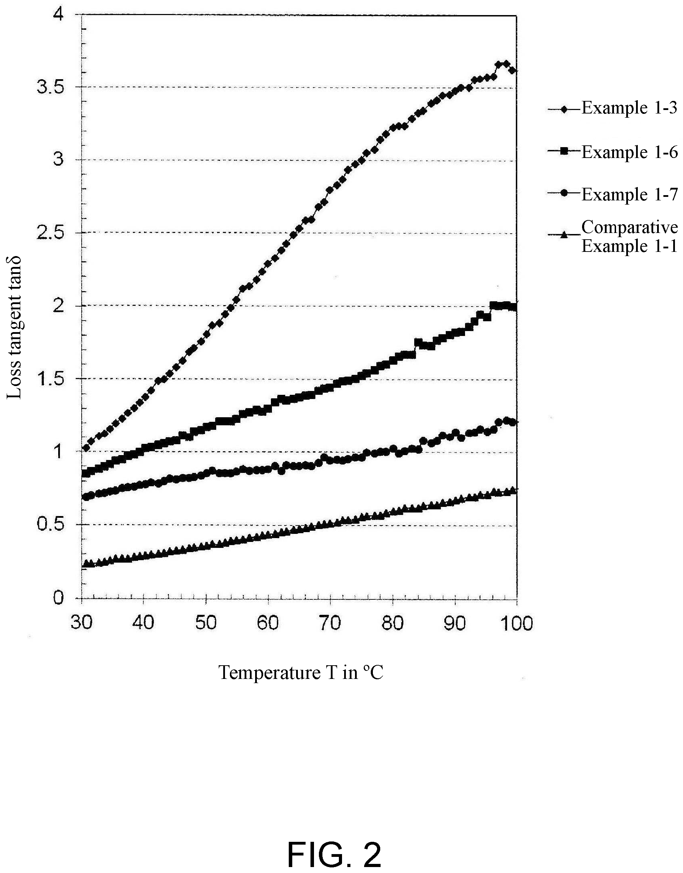

FIG. 1 shows a chart of tan δ (loss tangent) in strain dependence evaluation of the polymer compositions for Examples 1-3 and 1-6 and Comparative Examples 1-1 and 1-4. FIG. 2 shows a chart of tan δ (loss tangent) in temperature dependence evaluation of the polymer compositions for Examples 1-3, 1-6, 1-7, and Comparative Example 1-1. HNBR1 to HNBR3 used in Polymer Compositions 1 to 9 exhibited viscosity or fluidity at 25 °C.

### <<Physical Property Measurements and Evaluation Methods>>

The physical property measurements and evaluation methods for the polymer composition, conductive material composition, electrode membrane, and secondary battery used in each of the Examples and Comparative Examples described below are as follows.

### <Preparation of Molecular Weight Measurement Sample>

The polymer composition was dropped into purified water to precipitate the polymer, and the precipitate was collected by filtration with a Buchner funnel. The precipitate was rinsed by sprinkling purified water on the Buchner funnel as it was, and then dissolved in tetrahydrofuran (THF) to obtain a solution. The obtained solution was dropped again into purified water, the filtration and a washing process using purified water were performed, and the precipitate was redissolved in THF to prepare a molecular weight measurement sample.

### <Measurement of Weight Average Molecular Weight (Mw) and Z Average Molecular Weight (Mz)>

The weight average molecular weight (Mw) and Z average molecular weight (Mz) of the polymer composition were measured by gel permeation chromatography (GPC) equipped with an RI detector using the molecular weight measurement sample. HLC-8320GPC (manufactured by Tosoh Corporation) was used as the apparatus, three separation columns were connected in series, and "TSKgel Super AW4000," "AW 3000," and "AW 2500" manufactured by Tosoh Corporation were used as fillers in this order. The measurement was performed at an oven temperature of 40 °C, using a N,N-dimethylformamide solution of 30 mM triethylamine and 10 mM LiBr as the eluent, and at a flow rate of 0.6 mL/min. The concentration of the measurement sample was adjusted to 1% using a solvent consisting of the eluent, and 20 microliters was injected. The weight average molecular weight and Z average molecular weight are polystyrene equivalent values.

The evaluation of weight average molecular weight (Mw) was as follows: A for 70,000 or less, B for greater than 70,000 and 100,000 or less, and C for greater than 100,000.

### <Preparation of Solution Having Solid Content Concentration of 20% by Mass>

80 parts by mass of NMP were placed in a stainless steel container and stirred with a disper while heating so that the liquid temperature reached 80 °C. The polymer heated to 80 °C in a separate container was added to the NMP so that the polymer concentration became 20% by mass, and stirred for 1 hour. After it was confirmed with a spoon or the like that there was no undissolved polymer on the liquid surface, container wall or bottom, the solid content was measured, and was corrected with NMP to obtain a solid content of 20% by mass, thereby preparing the polymer solution.

### <Viscosity Measurement of Solution Having Solid Content Concentration of 20% by Mass>

Immediately after the prepared polymer solution was allowed to stand in a constant temperature bath at 25 °C for 1 hour or more, the viscosity measurement was performed using a B-type viscometer at a rotor rotation speed of 60 rpm.

The evaluation of viscosity was as follows: A for less than 500 mPa·s, B for 500 mPa·s or more and less than 1000 mPa·s, C for 1000 mPa·s or more and 3000 mPa·s or less, and D for greater than 3000 mPa·s. Comparative Example 1-4 was not measured because the solid content concentration was less than 20% by mass.

### <Viscoelasticity Measurement of Polymer Composition>

### (Preparation of Sample Piece)

A fluororesin type mold was cut out to fit a measurement jig (having a parallel plate diameter of 25 mm), the polymer composition was dropped onto the fluororesin type mold, and the fluororesin type mold was dried in an oven at 140 °C for 1 hour to remove the solvent, thus preparing a sample piece. Since the polymer composition of the Examples was viscous and was unable to be separated from the fluororesin type mold as it was, the polymer composition was cooled with liquid nitrogen and was removed from the fluororesin type mold in a solidified state. To achieve a constant thickness of the sample, the plate was heated to 80 °C, the sample piece was placed thereon, and the thickness was corrected with the measurement jig. It was confirmed that the prepared sample piece did not contain bubbles.

### (Dynamic Viscoelasticity Test: Strain Dependence Evaluation)

The dynamic viscoelasticity (strain dependence) of the polymer was measured using a viscoelasticity measurement apparatus: MCR302e (Anton Paar). Specifically, the measurement was performed using a parallel plate having a diameter of 25 mm and under conditions of a GAP set to the thickness of the sample, a temperature of 100 °C, a frequency of 10 Hz, and a strain of 0.01% to 10%. The strain dependence of the polymer was evaluated by a chart with strain on the horizontal axis and tan δ (loss tangent) on the vertical axis. Here, tan δ (loss tangent) was obtained by loss modulus (G'') / storage modulus (G'). A case where tan δ was greater than 1 in the strain range of 0.01% to 10% was rated as ∘, and a case where tan δ was 1 or less was rated as ×.

### (Dynamic Viscoelasticity Test: Temperature Dependence Evaluation)

The dynamic viscoelasticity (temperature dependence) of the polymer was measured using a viscoelasticity measurement apparatus: MCR302e (Anton Paar). Specifically, the measurement was performed using a parallel plate having a diameter of 25 mm and under conditions of a constant normal force of 100 mN, a frequency of 10 Hz, a strain of 0.1%, a temperature range from 30 °C to 110 °C, and a cooling rate of 10 °C/min. The temperature dependence of the polymer can be evaluated by reading a temperature at which tan δ (loss tangent) is equal to 1 from a chart with temperature on the horizontal axis and tan δ (loss tangent) on the vertical axis. A case of 40 °C or higher and 80 °C or lower was rated as A, a case of 30 °C or higher and lower than 40 °C or higher than 80 °C and 110 °C or lower was rated as B, a case of lower than 30 °C was rated as C, and a case of higher than 110 °C was rated as D.

### (Method for Measuring Mooney Viscosity (ML1+4, 100 °C) of Polymer)

Purified water was dropped onto the polymer composition to coagulate the polymer. A coagulated product was collected and washed with methanol, transferred to a petri dish, and vacuum dried at 60 °C for 12 hours to obtain 40 g of a flat sample for measurement. The Mooney viscosity (ML1+4, 100 °C) was measured using an L-type rotor at a temperature of 100 °C in accordance with Japanese Industrial Standard JIS K 6300-1. The Mooney viscosity of HNBR1 to HNBR3 used in Polymer Compositions 1 to 9 were unable to be measured according to this measurement method.

### <Dispersibility Evaluation of Polymer Composition>

80 parts by mass of NMP were placed in a stainless steel container and stirred with a disper while heating so that the liquid temperature reached 80 °C. The polymer heated to 80 °C in a separate container was added to the NMP so that the polymer concentration became 8% by mass, and stirred for 1 hour. After it was confirmed with a spoon or the like that there was no undissolved polymer on the liquid surface, container wall or bottom, the solid content was measured, and was corrected with NMP to obtain a solid content of 8% by mass, thereby preparing a polymer solution X.

98 parts by mass of the prepared polymer solution X were placed in a glass container, 2 parts by mass of carbon nanotube JENOTUBE 10B (having an average outer diameter of 10 nm and a BET specific surface area of 230 m²/g, and being a multi-walled CNT) were further added, and the mixture was allowed to stand for 1 hour without stirring. Thereafter, samples were collected from the supernatant (at a height of 10% from the top of the glass container) and the bottom (at a height of 10% from the bottom of the glass container). Subsequently, the amount dropped onto a tared (W1) aluminum dish was each measured with a precision balance. The measured mass was set as W2. Thereafter, the aluminum dish was dried in an oven at 140 °C for 1 hour, and the mass of the aluminum dish was measured again with a precision balance (W3). The solid content of the supernatant and the bottom was calculated by Equation 2 below. $Solid content = \left(W3-W1\right) / W 2$ Equation 2

Thereafter, the dispersibility of the polymer composition was able to be evaluated from a dispersion degree of the carbon nanotube by a value obtained by dividing the solid content of the supernatant by the solid content of the bottom. A case of 0.75 or more and less than 1.25 was rated as A, a case of 0.5 or more and less than 0.75 or 1.25 or more and less than 1.50 was rated as B, and a case of less than 0.5 or 1.50 or more was rated as C.

### <Initial Viscosity of Conductive material composition>

Immediately after the conductive material composition was allowed to stand in a constant temperature bath at 25 °C for 1 hour or more, the measurement was performed using a B-type viscometer at a rotor rotation speed of 100 rpm. The evaluation of initial viscosity was as follows: A for 100 mPa·s or more and less than 500 mPa·s, B for 500 mPa·s or more and less than 1000 mPa·s, C for 1000 mPa·s or more and 2000 mPa·s or less, and D for more than 2000 mPa·s.

### <Dispersibility Evaluation of Conductive material composition>

The dispersibility of the conductive material composition was evaluated by measuring a cumulative particle diameter D50. The measurement of the cumulative particle diameter D50 by particle size distribution was performed using a laser diffraction/scattering particle size distribution analyzer (manufactured by Horiba, Ltd.; Partica LA-960V2). The present measurement apparatus had a laser light wavelength of 650 nm, and included, as detectors, one ring-shaped 64-segment silicon photodiode, five 4-channel array detectors, and three silicon photodetectors. A flow-type cell (sample cell) made of synthetic quartz was used for the measurement section.

First, NMP being the same solvent as the dispersion liquid was put into a sample bath containing a sample cell, and circulation/ultrasonic cleaning was performed. The operation mode was set as follows: circulation speed: 3, ultrasonic intensity:7, ultrasonic time: 1 minute, stirring speed: 7, and stirring mode: continuous. Subsequently, for air removal, ultrasonic operation was performed under an ultrasonic intensity of 7 and an ultrasonic time of 5 seconds, and then blank (background) measurement was performed. The particle diameter basis was set to volume, the particle refractive index was set to 1.920-0.522i (carbon material), and the solvent refractive index was set to 1.468 (NMP). The dispersion liquid was added dropwise so that a laser light transmittance during measurement was 60% ± 1%, and sample adjustment was performed. The operation mode during measurement was set as follows: circulation speed: 3, stirring speed: 7, and stirring mode: continuous.

The evaluation of the dispersibility of the conductive material composition was as follows: A for a cumulative particle diameter D50 value of less than 3 µm, B for 3 µm or more and less than 10 µm, and C for 10 µm or more.

### <Storage Stability Evaluation of Conductive material composition>

After the conductive material composition was allowed to stand in a constant temperature bath at 40 °C for 1 week, the conductive material composition was cooled to 25 °C, and then was immediately measured for the viscosity over time using a B-type viscometer at a rotor rotation speed of 100 rpm. The evaluation of storage stability was performed based on a value obtained by dividing the viscosity over time (after 1 week at 40 °C) by the initial viscosity. A case of 0.8 or more and less than 3.0 was rated as A, a case of 3.0 or more and less than 5.0 was rated as B, and a case of less than 0.8 or 5.0 or more was rated as C.

### <Adhesion Evaluation of Electrode Membrane>

Adhesion of the electrode membrane was evaluated by measuring a peel strength. A mixture slurry was applied onto aluminum foil using an applicator so that a basis weight per unit area of the electrode was 20 mg/cm², and then the coating film was dried in an electric oven at 120 °C ± 5 °C for 25 minutes. Thereafter, two rectangular pieces of 90 mm × 20 mm were cut with a coating direction as the long axis. For the measurement of peel strength, a tabletop tensile tester (Strograph E3; manufactured by Toyo Seiki Seisaku-sho, Ltd.) was used, and evaluation was performed by a 180-degree peel test method. Specifically, a double-sided tape (No. 5000NS; manufactured by Nitoms Co., Ltd.) having a size of 100 mm × 30 mm was attached onto a stainless steel plate, the prepared battery electrode mixture layer was adhered to the other side of the double-sided tape, the tape was peeled off while being pulled from bottom to top at a constant speed (50 mm/min), and an average value of the stress at this time was taken as the peel strength. The evaluation of the adhesion of the electrode membrane was as follows: A for a peel strength of 1.0 N/cm or more, B for a peel strength of 0.7 N/cm or more and less than 1.0 N/cm, C for a peel strength of 0.5 N/cm or more and less than 0.7 N/cm, and D for a peel strength of less than 0.5 N/cm.

### <Rate Characteristic Evaluation of Lithium Ion Secondary Battery>

A laminate-type lithium ion secondary battery was placed in a constant temperature room at 25 °C, and charge-discharge measurement was performed using a charge-discharge device (SM-8; manufactured by Hokuto Denko Corporation). Constant current constant voltage charging (cutoff current of 1.0 mA (0.02C)) was performed at an end-of-charge voltage of 4.2 V with a charging current of 10 mA (0.2C), and then constant current discharge was performed at an end-of-discharge voltage of 2.5 V with a discharge current of 10 mA (0.2C). After this operation was repeated three times, constant current constant voltage charging (cutoff current of 1.0 mA (0.02C)) was performed at an end-of-charge voltage of 4.2 V with a charging current of 10 mA (0.2C), and constant current discharge was performed with discharge currents of 0.2C and 3C until the end-of-discharge voltage reached 2.5 V, and the discharge capacity was determined for each. A rate characteristic can be expressed by a ratio of the 0.2C discharge capacity to the 3C discharge capacity, as shown in Equation 3 below. 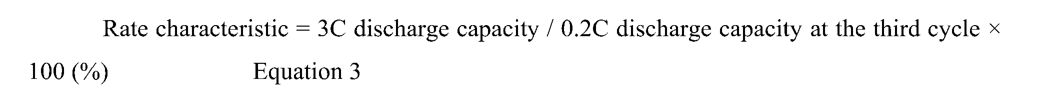 Rate characteristic = 3C discharge capacity / 0.2C discharge capacity at the third cycle × 100 (%) Equation 3

The rate characteristic evaluation was as follows: A for a rate characteristic of 80% or more, B for a rate characteristic of 70% or more and less than 80%, C for a rate characteristic of 60% or more and less than 70%, and D for a rate characteristic of less than 60%.

### <High-Temperature Cycle Characteristic Evaluation of Lithium Ion Secondary Battery>

A laminate-type lithium ion secondary battery was placed in a constant temperature room at 45 °C, and charge-discharge measurement was performed using a charge-discharge device (SM-8; manufactured by Hokuto Denko Corporation). Constant current constant voltage charging (cutoff current of 1.25 mA (0.025C)) was performed at an end-of-charge voltage of 4.2 V with a charging current of 50 mA (1C), and then constant current discharge was performed at an end-of-discharge voltage of 2.5 V with a discharge current of 50 mA (1C) . This operation was repeated 200 times. 1C was defined as a current value at which a theoretical capacity of the positive electrode is discharged in 1 hour. A cycle characteristic can be expressed by a ratio of the 1C discharge capacity at the 100th cycle to the 1C discharge capacity at the third cycle at 45 °C, as shown in Equation 4 below. The high-temperature cycle characteristic evaluation was as follows: A for a cycle characteristic of 90% or more, B for a cycle characteristic of 85% or more and less than 90%, C for a cycle characteristic of 80% or more and less than 85%, and D for a cycle characteristic of less than 80%. 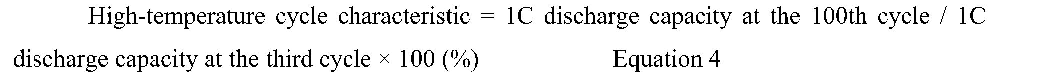 High-temperature cycle characteristic = 1C discharge capacity at the 100th cycle / 1C discharge capacity at the third cycle × 100 (%) Equation 4

### (Example 2-1)

To a stainless steel container, 84.0 parts of N-methyl-2-pyrrolidone (NMP) and 8.0 parts of a polymer composition (having a solid content concentration of 20% by mass) were added and stirred using a disper. Thereafter, 8 parts of CNT1 were taken and added while being stirred with the disper. A fine emulsor screen was attached to a high shear mixer (L5M-A; manufactured by Silverson), and batch-type dispersion was performed at a speed of 9000 rpm until the entire mixture became uniform and a dispersion particle size became 200 µm or less as measured by a grind gauge. Then, a carbon material preliminary dispersion composition was prepared through a high magnetic force mag filter (manufactured by Eishin; having a surface magnetic flux density of 17000 gauss). Furthermore, thereafter, the carbon material preliminary dispersion composition was fed and subjected to circulation-type dispersion treatment (at a bead filling rate of 80% and a peripheral speed of 13 m/s) with a residence time of 15 minutes using a bead mill (manufactured by Ashizawa Finetech Ltd.; Mugen Flow (registered trademark)) filled with zirconia beads having a diameter of 1.0 mm. The number of circulation cycles was 30. Subsequently, a liquid to be dispersed was supplied to a high-pressure homogenizer (manufactured by Sugino Machine Limited; Starburst Labo), and 24-pass dispersion treatment was performed. The dispersion treatment was performed using a single nozzle chamber at a nozzle diameter of 0.25 mm and a pressure of 100 MPa. Thereafter, the liquid to be dispersed was supplied to an electromagnet (electromagnet manufactured by Taiho Magnetic Co., Ltd.; EMF-100S; having a magnetic flux density of 16000 gauss, a space volume of 1.7 L, and equipped with 31 grid screens having a diameter of 10 cm and a thickness of 1.3 cm), and 3-pass treatment was performed. Then, the liquid to be dispersed was passed through two depth filters (manufactured by 3M; PP nonwoven fabric depth cartridge NT-T series; having a filtration accuracy of 40 µm) installed in series to prepare Conductive material composition 1.

### (Examples 2-2 to 2-12 and Comparative Examples 2-1 to 2-4)

In accordance with the compositions in Table 2, conductive material compositions were prepared in the same manner as in Example 1, and Conductive material compositions 2 to 12 and Comparative conductive material compositions 1 to 4 were prepared.

### (Example 3-1)

Into a plastic container having a capacity of 150 cm³, 18.8 parts by mass of an NMP solution in which 8% by mass of PVdF (polyvinylidene fluoride; manufactured by Solvay; Solef #5130) was dissolved and 14.5 parts by mass of NMP were weighed. Thereafter, 18.8 parts by mass of a conductive material composition (Conductive material composition 1) were added and stirred at 2000 rpm for 30 seconds using a rotation-revolution mixer (Awatori Rentaro; ARE-310). Furthermore, thereafter, 96.7 parts by mass of the positive electrode active material NCM1 were added and stirred at 2000 rpm for 2.5 minutes using a rotation-revolution mixer (Awatori Rentaro; ARE-310) to obtain a mixture slurry.

Subsequently, the mixture slurry was applied onto aluminum foil using an applicator so that a basis weight per unit area of the electrode was 20 mg/cm², and then the coating film was dried in an electric oven at 120 °C ± 5 °C for 25 minutes to obtain an electrode membrane (Electrode membrane 1). Thereafter, the electrode membrane (Electrode membrane 1) was subjected to rolling treatment using a roll press (manufactured by THANK-METAL; 3t hydraulic roll press) to obtain a positive electrode (Positive electrode 1). A basis weight per unit area of a mixture layer was 20 mg/cm², and the density of the mixture layer after rolling treatment was 3.1 g/cc.

### (Examples 3-2 to 3-16 and Comparative Examples 3-1 to 3-4)

Positive electrodes (Positive electrode 2 to Comparative positive electrode 4) were prepared by the same method as the production of the positive electrode (Positive electrode 1), except that the positive electrode active material and conductive material composition were changed to those shown in Table 3.

### (Example 4-1)

A positive electrode (Positive electrode 1) and a standard negative electrode were punched out to 45 mm × 40 mm and 50 mm × 45 mm, respectively, and together with a separator (porous polypropylene film) inserted therebetween, were inserted into an aluminum laminate bag and dried in an electric oven at 60 °C for 1 hour. Thereafter, in a glove box filled with argon gas, 2 mL of an electrolyte solution (a non-aqueous electrolyte solution obtained in the following manner: a mixed solvent was prepared in which ethylene carbonate, ethyl methyl carbonate, and dimethyl carbonate were mixed at a ratio of 1:1:1 (volume ratio), 2 parts by mass of vinylene carbonate (VC) as an additive were further added per 100 parts by mass of the mixed solvent, and then LiPF₆ was dissolved at a concentration of 1M) was injected, and then the aluminum laminate bag was sealed to prepare a laminate-type lithium ion secondary battery (Battery 1).

### (Examples 4-2 to 4-16 and Comparative Examples 4-1 to 4-4)

Laminate-type lithium ion secondary batteries (Battery 2 to Comparative battery 4) were prepared by the same method as the production of the laminate-type lithium ion secondary battery (Secondary battery 1), except that the positive electrode was changed to those shown in Table 4.

**[Table 1]**

| Table 1 | | Raw material | | | Evaluation method | | | | | |
|---|---|---|---|---|---|---|---|---|---|---|
| | Polymer composition | Polymer | Base | | Molecular weight measurement | | Viscosity of solution having solid content concentration of 20% by mass | Dynamic viscoelasticity evaluation | | Dispersibility evaluation |
| | | Type | Type | Amount added (parts) with respect to 100 parts of polymer | Weight average molecular weight Mw | Z average molecular weight Mz | | Strain dependence | Temperature dependence | |
| Example 1-1 | Polymer composition 1 | HNBR1 | - | | B | 98000 | B | ○ | B | B |
| Example 1-2 | Polymer composition 2 | HNBR2 | - | | A | 50000 | A | ○ | C | B |
| Example 1-3 | Polymer composition 3 | HNBR3 | - | | A | 51000 | A | ○ | B | B |
| Example 1-4 | Polymer composition 4 | HNBR2 | NaOH | 0.5 | A | 49000 | A | ○ | B | A |
| Example 1-5 | Polymer composition 5 | HNBR2 | NaOH | 1 | A | 49000 | A | ○ | B | A |
| Example 1-6 | Polymer composition 6 | HNBR2 | NaOH | 2 | A | 49000 | A | ○ | A | A |
| Example 1-7 | Polymer composition 7 | HNBR2 | NaOH | 4 | A | 32000 | A | ○ | A | A |
| Example 1-8 | Polymer composition 8 | HNBR3 | t-BuONa | 1 | A | 42000 | B | ○ | B | B |
| Example 1-9 | Polymer composition 9 | HNBR3 | Ethanolamine | 5 | A | 47500 | B | ○ | B | B |
| Comparative Example 1-1 | Comparative polymer composition 1 | HNBR4 | - | | C | 210000 | D | × | D | C |
| Comparative Example 1-2 | Comparative polymer composition 2 | HNBR4 | NaOH | 2 | B | 159000 | D | × | D | C |
| Comparative Example 1-3 | Comparative polymer composition 3 | HNBR5 | - | | B | 150000 | D | × | D | C |
| Comparative Example 1-4 | Comparative polymer composition 4 | HNBR4 | NaOH | 15 | A | 35000 | - | × | D | C |

**[Table 2]**

| Table 2 | | | | Polymer composition | | | | | | Evaluation | | |
|---|---|---|---|---|---|---|---|---|---|---|---|---|
| | Conductive material composition | Conductive material | | Type | Polymer | | Base | | NMP | Initial viscosity | Dispersib ility | Storage stability |
| | | Type | Concentra tion (parts) in dispersion liquid | | Type | Concentra tion (parts) in dispersion liquid | Type | Concentra tion (parts) in dispersion liquid | Content (parts) | | | |
| Example 2-1 | Conductive material composition 1 | CNT1 | 8 | Polymer composition 1 | HNBR1 | 1.6 | - | | 90.40 | B | B | B |
| Example 2-2 | Conductive material composition 2 | CNTl | 8 | Polymer composition 2 | HNBR2 | 1.6 | - | | 90.40 | B | A | B |
| Example 2-3 | Conductive material composition 3 | CNT1 | 8 | Polymer composition 3 | HNBR3 | 1.6 | - | | 90.40 | B | B | A |
| Example 2-4 | Conductive material composition 4 | CNT1 | 8 | Polymer composition 4 | HNBR2 | 1.6 | NaOH | 0.008 | 90.39 | A | A | A |
| Example 2-5 | Conductive material composition 5 | CNT1 | 8 | Polymer composition 5 | HNBR2 | 1.6 | NaOH | 0.016 | 90.38 | A | A | A |
| Example 2-6 | Conductive material composition 6 | CNT1 | 8 | Polymer composition 6 | HNBR2 | 1.6 | NaOH | 0.032 | 90.37 | A | A | A |
| Example 2-7 | Conductive material composition 7 | CNT1 | 8 | Polymer composition 7 | HNBR2 | 1.6 | NaOH | 0.064 | 90.34 | A | B | B |
| Example 2-8 | Conductive material composition 8 | CNT1 | 8 | Polymer composition 8 | HNBR3 | 1.6 | t-BuONa | 0.016 | 90.38 | A | B | B |
| Example 2-9 | Conductive material composition 9 | CNT1 | 8 | Polymer composition 9 | HNBR3 | 1.6 | Ethanolamine | 0.08 | 90.32 | B | B | B |
| Example 2-10 | Conductive material composition 10 | CNT2 | 3 | Polymer composition 6 | HNBR2 | 0.6 | NaOH | 0.012 | 96.39 | A | A | A |
| Example 2-11 | Conductive material composition 11 | CNT2 | 4 | Polymer composition 6 | HNBR2 | 0.8 | NaOH | 0.016 | 95.18 | B | A | A |
| Example 2-12 | Conductive material composition 12 | CB1 | 16 | Polymer composition 6 | HNBR2 | 3.2 | NaOH | 0.064 | 80.74 | A | A | A |
| Comparative Example 2-1 | Comparative conductive material composition 1 | CNT1 | 8 | Comparative polymer composition 1 | HNBR4 | 1.6 | - | | 90.40 | D | C | C |
| Comparative Example 2-2 | Comparative conductive material composition 2 | CNT1 | 8 | Comparative polymer composition 2 | HNBR4 | 1.6 | NaOH | 0.032 | 90.37 | C | C | C |
| Comparative Example 2-3 | Comparative conductive material composition 3 | CNT1 | 8 | Comparative polymer composition 3 | HNBR5 | 1.6 | - | | 90.40 | D | C | C |
| Comparative Example 2-4 | Comparative conductive material composition 4 | CNT1 | 8 | Comparative polymer composition 4 | HNBR4 | 1.6 | NaOH | 0.24 | 90.16 | C | B | C |

### [Table 3]

**Table 3**

| | Positive electrode | Positive electrode active material | | Binder | | Conductive material composition | | Evaluation |
|---|---|---|---|---|---|---|---|---|
| | | Type | Solid content ratio (parts) | Type | Solid content ratio (parts) | Type | Solid content ratio (parts) | Adhesion |
| Example 3-1 | Positive electrode 1 | NMC1 | 96.70 | PVdF | 1.5 | Conductive material composition 1 | 1.80 | B |
| Example 3-2 | Positive electrode 2 | NMC1 | 96.70 | PVdF | 1.5 | Conductive material composition 2 | 1.80 | B |
| Example 3-3 | Positive electrode 3 | NMC1 | 96.70 | PVdF | 1.5 | Conductive material composition 3 | 1.80 | B |
| Example 3-4 | Positive electrode 4 | NMC1 | 96.70 | PVdF | 1.5 | Conductive material composition 4 | 1.80 | A |
| Example 3-5 | Positive electrode 5 | NMC1 | 96.70 | PVdF | 1.5 | Conductive material composition 5 | 1.80 | A |
| Example 3-6 | Positive electrode 6 | NMC1 | 96.69 | PVdF | 1.5 | Conductive material composition 6 | 1.81 | A |
| Example 3-7 | Positive electrode 7 | NMC1 | 96.69 | PVdF | 1.5 | Conductive material composition 7 | 1.81 | A |
| Example 3-8 | Positive electrode 8 | NMC1 | 96.70 | PVdF | 1.5 | Conductive material composition 8 | 1.80 | B |
| Example 3-9 | Positive electrode 9 | NMC1 | 96.69 | PVdF | 1.5 | Conductive material composition 9 | 1.82 | B |
| Example 3-10 | Positive electrode 10 | NMC1 | 96.69 | PVdF | 1.5 | Conductive material composition 10 | 1.81 | A |
| Example 3-11 | Positive electrode 11 | NMC1 | 96.69 | PVdF | 1.5 | Conductive material composition 11 | 1.81 | A |
| Example 3-12 | Positive electrode 12 | NMC1 | 94.89 | PVdF | 1.5 | Conductive material composition 12 | 3.61 | A |
| Example 3-13 | Positive electrode 13 | NMC2 | 96.70 | PVdF | 1.5 | Conductive material composition 3 | 1.80 | B |
| Example 3-14 | Positive electrode 14 | NCA | 96.70 | PVdF | 1.5 | Conductive material composition 3 | 1.80 | B |
| Example 3-15 | Positive electrode 15 | LFP | 96.70 | PVdF | 1.5 | Conductive material composition 3 | 1.80 | B |
| Example 3-16 | Positive electrode 16 | LFMP | 96.70 | PVdF | 1.5 | Conductive material composition 3 | 1.80 | B |
| Comparative Example 3-1 | Comparative positive electrode 1 | NMC1 | 96.70 | PVdF | 1.5 | Comparative conductive material composition 1 | 1.80 | C |
| Comparative Example 3-2 | Comparative positive electrode 2 | NMC1 | 96.69 | PVdF | 1.5 | Comparative conductive material composition 2 | 1.81 | C |
| Comparative Example 3-3 | Comparative positive electrode 3 | NMC1 | 96.70 | PVdF | 1.5 | Comparative conductive material composition 3 | 1.80 | C |
| Comparative Example 3-4 | Comparative positive electrode 4 | NMC1 | 96.66 | PVdF | 1.5 | Comparative conductive material composition 4 | 1.85 | C |

### [Table 4]

**Table 4**

| | Battery | Positive electrode | Evaluation | |
|---|---|---|---|---|
| | | | Rate characteristics | Cycle characteristics |
| Example 4-1 | Battery 1 | Positive electrode 1 | B | C |
| Example 4-2 | Battery 2 | Positive electrode 2 | B | C |
| Example 4-3 | Battery 3 | Positive electrode 3 | B | B |
| Example 4-4 | Battery 4 | Positive electrode 4 | A | A |
| Example 4-5 | Battery 5 | Positive electrode 5 | A | A |
| Example 4-6 | Battery 6 | Positive electrode 6 | A | A |
| Example 4-7 | Battery 7 | Positive electrode 7 | A | B |
| Example 4-8 | Battery 8 | Positive electrode 8 | A | B |
| Example 4-9 | Battery 9 | Positive electrode 9 | A | B |
| Example 4-10 | Battery 10 | Positive electrode 10 | A | A |
| Example 4-11 | Battery 11 | Positive electrode 11 | A | A |
| Example 4-12 | Battery 12 | Positive electrode 12 | A | A |
| Example 4-13 | Battery 13 | Positive electrode 13 | A | A |
| Example 4-14 | Battery 14 | Positive electrode 14 | A | A |
| Example 4-15 | Battery 15 | Positive electrode 15 | A | A |
| Example 4-16 | Battery 16 | Positive electrode 16 | A | A |
| Comparative Example 4-1 | Comparative battery 1 | Comparative positive electrode 1 | D | D |
| Comparative Example 4-2 | Comparative battery 2 | Comparative positive electrode 2 | D | D |
| Comparative Example 4-3 | Comparative battery 3 | Comparative positive electrode 3 | D | D |
| Comparative Example 4-4 | Comparative battery 4 | Comparative positive electrode 4 | D | D |

Although the present invention has been described with reference to the above several embodiments, the present invention is not limited by the above several embodiments. Various modifications can be made to the configuration and details of the present invention within the scope of the present invention.

The disclosure of the present application is related to the subject matter described in Japanese Patent Application No. 2023-222006 filed on December 27, 2023, and the entire disclosure thereof is incorporated herein by reference.

## Claims

1. A polymer composition for an electrochemical element, the polymer composition comprising a polymer containing an aliphatic hydrocarbon unit and a nitrile group-containing unit, and an amide-based liquid medium, wherein the polymer has a tan δ (loss tangent) of greater than 1 in a strain range of 0.01% to 10% in a dynamic viscoelasticity measurement performed at a temperature of 100 °C and a frequency of 10 Hz.

2. The polymer composition for an electrochemical element according to claim 1, wherein in a viscoelasticity measurement performed at a frequency of 10 Hz and a strain of 0.1%, when the temperature is raised at 10 °C/min in a temperature range from 30 °C to 110 °C, a measured temperature at which the polymer has a tan δ (loss tangent) equal to 1 is 80 °C or lower.

3. The polymer composition for an electrochemical element according to claim 1 or 2, wherein a solution comprising the polymer and N-methyl-2-pyrrolidone and having a solid content concentration of 20% by mass has a viscosity of less than 3000 mPa·s at 25 °C and 60 rpm when measured with a B-type viscometer.

4. The polymer composition for an electrochemical element according to claim 1 or 2, wherein based on a mass of the polymer, a content of the aliphatic hydrocarbon unit is 50% by mass or more and 75% by mass or less, and a content of the nitrile group-containing unit is 25% by mass or more and 50% by mass or less.

5. The polymer composition for an electrochemical element according to claim 1 or 2, wherein the polymer has a Z average molecular weight of 10,000 or more and 250,000 or less.

6. A conductive material composition, comprising the polymer composition for an electrochemical element according to claim 1 or 2, and a conductive material.

7. A slurry composition, comprising the polymer composition for an electrochemical element according to claim 1 or 2, a conductive material, and an active material.

8. An electrode membrane, formed using a slurry composition comprising the polymer composition for an electrochemical element according to claim 1 or 2, a conductive material, and an active material.

9. A secondary battery, comprising a positive electrode, a negative electrode, and an electrolyte, wherein at least one of the positive electrode and the negative electrode comprises an electrode membrane formed using a slurry composition comprising the polymer composition for an electrochemical element according to claim 1 or 2, a conductive material, and an active material.
